(19) Europäisches Patentamt

European Patent Office

Office européen des brevets

(11) **EP 2 118 623 B1**

(12) **EUROPÄISCHE PATENTSCHRIFT**

(45) Veröffentlichungstag und Bekanntmachung des Hinweises auf die Patenterteilung:
**09.11.2016 Patentblatt 2016/45**

(51) Int Cl.:
***G01F 1/84*** *(2006.01)*

(21) Anmeldenummer: **07848105.8**

(86) Internationale Anmeldenummer:
**PCT/EP2007/063958**

(22) Anmeldetag: **14.12.2007**

(87) Internationale Veröffentlichungsnummer:
**WO 2008/077818 (03.07.2008 Gazette 2008/27)**

(54) **MESSWANDLER VOM VIBRATIONSTYP**

VIBRATORY TRANSDUCER

TRANSDUCTEUR DE MESURE DU TYPE À VIBRATIONS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.12.2006 DE 102006062219**
**22.12.2006 DE 102006062220**
**22.12.2006 DE 102006062185**

(43) Veröffentlichungstag der Anmeldung:
**18.11.2009 Patentblatt 2009/47**

(73) Patentinhaber: **Endress+Hauser Flowtec AG**
**4153 Reinach (CH)**

(72) Erfinder:
• **FUCHS, Michael**
**79427 Eschbach (DE)**
• **PROBST, Leonhard**
**4146 Hochwald (CH)**
• **RIEDER, Alfred**
**84032 Landshut (DE)**
• **WIESMANN, Michael**
**85356 Freising (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
EP-A- 1 253 408    WO-A-00/42393
WO-A-87/01444    DE-A1- 10 235 322
US-A- 4 955 239    US-A1- 2004 221 661

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen, insb. für eine Verwendung in einem Coriolis-Massedurchflußmesser geeigneten, Meßwandler vom Vibrationstyp.

Zur Ermittlung von Parametern, beispielsweise eines Massedurchflusses, einer Dichte, einer Viskosität etc., von in einer Rohrleitung strömenden Medien, beispielsweise von Flüssigkeiten und/oder Gasen, werden oftmals, insb. als Coriolis-Massedurchflußmesser ausgebildete, In-Line-Meßgeräte verwendet, die mittels eines Meßwandlers vom Vibrationstyp und einer daran angeschlossener Betriebs- und Auswerteelektronik, im strömenden Medium Kräfte, beispielsweise Corioliskräfte, induzieren und von diesen abgeleitet ein den wenigstens einen Parameter entsprechend repräsentierendes Meßsignal erzeugen. Derartige In-Line-Meßgeräte mit einem Meßaufnehmer vom Vibrationstyp sind seit langem bekannt und haben sich gleichermaßen im industriellen Einsatz etabliert. So sind z.B. in der EP-A 317 340, der US-A 53 98 554, der US-A 54 76 013, der US-A 55 31 126, der US-A 56 91 485, US-A 57 05 754, der US-A 57 96 012, der US-A 59 45 609, der US-A 59 79 246, der US-A 60 06 609, der US-B 63 97 685, der US-B 66 91 583, der US-B 68 40 109, der WO-A 99 51 946, WO-A 99 40 394 oder der WO-A 00 14 485, Coriolis-Massedurchflußmesser mit jeweils einem Meßwandler vom Vibrationstyp beschrieben. Jeder der darin gezeigten Meßwandler umfaßt ein einziges gerades, im Betrieb vibrierendes Meßrohr zum Führen des Mediums, welches Meßrohr über ein einlaßseitig einmündendes Einlaßrohrstück und über ein auslaßseitig einmündendes Auslaßrohrstück mit der Rohrleitung kommuniziert, sowie eine Erregeranordnung, die das Meßrohr im Betrieb mittels wenigstens eines darauf einwirkenden elektromechanischen, insb. elektro-dynamischen, Schwingungserregers zu Biegeschwingungen in einer Rohrebene anregt, und eine Sensoranordnung mit, insb. elektro-dynamischen, Schwingungssensoren zum zumindest punktuellen Erfassen einlaßseitiger und auslaßseitiger Schwingungen des Meßrohrs und zum Erzeugen von vom Massedurchfluß beeinflußten elektrischen Sensorsignalen. Zudem weist jeder der gezeigten Meßwandler ein, insb. direkt am Einlaßrohrstück und am Auslaßrohrstück fixiertes, das Meßrohr mit daran gekoppeltem Gegenschwinger sowie die vorgesehene Erreger- und Sensoranordnung umhüllendes Wandlergehäuse auf. Neben den für das Erfassen von Vibrationen des Meßrohrs vorgesehenen Schwingungssensoren kann der Meßwandler, wie u.a. auch in der EP-A 831 306, der US-B 70 40 179, der US-A 57 36 653, der US-A 53 81 697 oder der WO-A 01/02 816 vorgeschlagen, noch weitere, insb. dem Erfassen eher sekundärer Meßgrößen, wie z.B. Temperatur, Beschleunigung, Dehnung, Spannung etc., dienende am Innenteil angeordnete Sensoren aufweisen.

Gerade Meßrohre bewirken bekanntlich, zu Biegeschwingungen gemäß einer ersten Eigenschwingungsform - dem sogenannten Antriebs- oder auch Nutz-Mode - angeregt, im hindurchströmenden Medium Corioliskräfte. Diese wiederum führen dazu, daß den angeregten Biegeschwingungen koplanare Biegeschwingungen gemäß einer zweiten Eigenschwingungsform von höherer und/oder niederer Ordnung - dem sogenannten Coriolis-Mode -überlagert werden und dementsprechend die mittels der Sensoranordnung einlaßseitig und auslaßseitig erfaßten Schwingungen eine auch vom Massedurchfluß abhängige, meßbare Phasendifferenz aufweisen. Üblicherweise werden die Meßrohre derartiger, besonders in Coriolis-Massedurchflußmessern eingesetzten, Meßwandler im Nutzmode auf einer momentanen Resonanzfrequenz der ersten Eigenschwingungsform, insb. bei konstantgeregelter Schwingungsamplitude, angeregt. Da diese Resonanzfrequenz insb. auch von der momentanen Dichte des Mediums abhängig ist, kann mittels marktüblicher Coriolis-Massedurchflußmesser neben dem Massedurchfluß zumindest auch die Dichte von strömenden Medien direkt gemessen werden.

Ein Vorteil gerader Meßrohre besteht z.B. darin, daß sie praktisch in jeder beliebigen Einbaulage, insb. auch nach einer in-line durchgeführten Reinigung, mit hoher Sicherheit rückstandsfrei entleert werden können. Ferner sind solche Meßrohre im Vergleich z.B. zu einem omegaförmig oder helixförmig gebogenem Meßrohr wesentlich einfacher und dementsprechend kostengünstiger herzustellen. Ein weiterer Vorteil eines in der oben beschriebenen Weise vibrierenden, geraden Meßrohrs ist im Vergleich zu gebogenen Meßrohren z.B. auch darin zu sehen, daß im Meßbetrieb via Meßrohr praktisch keine Torsionsschwingungen in der angeschlossenen Rohrleitung hervorgerufen werden. Demgegenüber besteht ein besonderes Problem vorbeschriebener Meßwandler darin, daß aufgrund wechselseitiger lateraler Auslenkungen des vibrierenden einzigen Meßrohrs gleichfrequent oszillierende Querkräfte auf die Rohrleitung wirken können, und daß diese Querkräfte bisher nur sehr begrenzt und nur mit einem sehr hohen technischen Aufwand kompensiert werden können.

Zur Verbesserung der dynamischen Balance des Meßwandlers, insb. zur Reduzierung solcher durch das vibrierende einzige Meßrohr erzeugten, einlaßseitig und auslaßseitig auf die Rohrleitung einwirkenden Querkräften, umfassen die in der EP-A 317 340, der US-A 53 98 554, der US-A 55 31 126, der US-A 56 91 485, der US-A 57 96 012, US-A 59 79 246, US-A 60 06 609, der US-B 63 97 685, der US-B 66 91 583, der US-B 68 40 109 oder der WO-A 00 14 485 gezeigten Meßwandler jeweils wenigstens einen einstückigen oder mehrteilig ausgeführten Gegenschwinger, der unter Bildung einer ersten Kopplungszone einlaßseitig am Meßrohr fixiert ist und der unter Bildung einer zweiten Kopplungszone auslaßseitig am Meßrohr fixiert ist. Derartige balkenförmig, insb. rohrförmig, oder als mit dem Meßrohr fluchtendes Körperpendel realisierte Gegenschwinger schwingen im Betrieb zum jeweiligen Meßrohr außer Phase, insb. gegenphasig, wodurch die Wirkung der durch Meßrohr und Gegenschwinger jeweils hervorgerufenen seitlichen Querkräfte und/oder Querimpulse auf die Rohrleitung minimiert und ggf. auch völlig unterdrückt werden können.

Bei markgängigen Meßwandlern mit einem einzigen Meßrohr und einem daran gekoppelten Gegenschwinger ist der Schwingungserreger der Erregeranordnung mittels wenigstens einer üblicherweise am Gegenschwinger fixierten, zumindest zeitweise von einem Strom durchflossene und zumindest zeitweise von einem Magnetfeld durchsetzte Spule sowie einem am Meßrohr fixierten, mit der wenigstens eine Spule zusammenwirkenden Anker gebildet. Bei den meisten Meßwandlern der beschriebenen Art sind die Schwingungssensoren der Sensoranordnung nach dem gleichen Prinzip aufgebaut, wie vorgenannte Schwingungserreger. Dementsprechend sind auch die Schwingungssensoren einer solchen Sensoranordnung zumeist jeweils mittels einer Spule mittels wenigstens einer üblicherweise am Gegenschwinger fixierten, zumindest zeitweise von einem Strom durchflossene und zumindest zeitweise von einem Magnetfeld durchsetzte Spule sowie einem am Meßrohr fixierten, mit der wenigstens eine Spule zusammenwirkenden Anker gebildet. Jede der vorgenannten Spulen ist zudem mittels wenigstens eines Paars elektrischer Anschlußleitungen mit der erwähnten Betriebs- und Auswerteelektronik des In-Line-Meßgeräts verbunden. Die Anschlußleitungen sind üblicherweise auf möglichst kurzem Wege von den Spulen über den Gegenschwinger hin zum Wandlergehäuse geführt.

Meßwandler der beschriebenen Art mit einzigem Meßrohr und Gegenschwinger haben sich insb. bei solchen Anwendungen bewährt, bei denen das zu messende Medium eine im wesentlich konstante oder nur in einem sehr geringen Maße veränderliche Dichte aufweist, also bei solchen Anwendungen, bei denen eine auf die angeschlossene Rohrleitung wirkende Resultierende aus den vom Meßrohr erzeugten Querkräften und vom Gegenschwinger erzeugten Gegenkräften vorab ohne weiteres auf Null fest eingestellt werden kann. Demgegenüber weisen solche Meßwandler, insb. gemäß der US-A 55 31 126 oder der US-A 59 69 265, bei Anwendung für Medien mit in einem weiten Bereich schwankender Dichte, z.B. verschiedenen, aufeinanderfolgend zu messenden Medien, wenn auch in geringerem Maße, praktisch den gleichen Nachteil wie Meßwandler ohne Gegenschwinger auf, da vorgenannte Resultierende auch von der Dichte des Mediums abhängig sind und somit in erheblichem Maße von Null verschieden sein können. Anders gesagt, auch durch zumindest das Meßrohr und den Gegenschwinger gebildetes Innenteil des Meßwandlers wird im Betrieb aufgrund von dichteabhängigen Unbalancen und damit einhergehenden Querkräften aus einer zugewiesenen statischen Ruhelage global ausgelenkt.

Ein Möglichkeit zur Reduzierung von dichteabhängigen Querkräften ist z.B. in der US-A 52 87 754, der US-A 57 05 754, der US-A 57 96 010 oder der US-B 69 48 379 beschrieben. Bei den dort gezeigten Meßwandlern werden die seitens des vibrierenden einzigen Meßrohrs erzeugten, eher mittel- oder hochfrequent oszillierenden Querkräfte mittels eines im Vergleich zum Meßrohr sehr schweren Gegenschwingers und ggf. einer relativ weichen Ankopplung des Meßrohrs an die Rohrleitung, also praktisch mittels eines mechanischen Tiefpasses, von der Rohrleitung, fern gehalten. Ein großer Nachteil eines solchen Meßwandlers besteht u.a. aber darin, daß die zur Erzielung einer ausreichend robusten Dämpfung erforderliche Masse des Gegenschwingers überproportional mit Nennweite des Meßrohrs steigt. Umgekehrt ist bei Verwendung eines solch massiger Gegenschwingers aber auch sicherzustellen, daß eine mit zunehmender Masse immer niedriger werdende minimale Eigenfrequenz des Meßwandlers nach wie vor weitab von den ebenfalls sehr niedrigen Eigenfrequenzen der angeschlossenen Rohrleitung liegt. Verschieden weiterführende Möglichkeiten zur Reduzierung der dichteabhängigen Querkräfte, sind z.B. in der US-A 59 79 246, der US-B 63 97 685, der US-B 66 91 583, der US-B 68 40 109, der WO-A 99 40 394 oder in der WO-A 00 14 485 vorgeschlagen. Bei den gezeigten Kompensationsmechanismen geht im Kern darum, eine Bandbreite, innerhalb der Gegenschwinger und Ausleger wirksam sind, durch ein geeignetes Zusammenspiel der einzelnen Komponenten des Innenteils des Meßwandlers zu erweitern. Im besonderen ist aus der US-B 63 97 685 ein Meßwandler der vorgenannten Art bekannt, bei dem als massenmäßige Ausgleichsmaßnahme für die Anregungs-Schwingung eine erste Ausgleichsmasse vorgesehen und in der senkrecht zur Längsachse stehenden Mittelebene des als Kompensationszylinders ausgebildeten Gegenschwingers mit diesem verbunden ist und als massenmäßige Ausgleichsmaßnahme für die Coriolis-Schwingung eine zweite Ausgleichsmasse und eine dritte Ausgleichsmasse vorgesehen sind und die zweite Ausgleichsmasse und die dritte Ausgleichsmasse als endseitige Bereiche des Gegenschwingers ausgebildet sind. Auf diese Weise soll erreicht werden, daß das aus dem Meßrohr und dem Kompensationszylinder bestehende schwingungsfähige Innenteil sowohl für die Anregungs-Schwingungen des Meßrohres als auch für die Coriolis-Schwingungen des Meßrohres massenmäßig zumindest weitestgehend ausgeglichen ist. Aus der WO-A 00 14 485 ist ferner ein Meßwandler vom Vibrationstyp für ein in einer Rohrleitung strömendes Medium beschrieben, bei dem ein einlaßseitiger erster Ausleger, der im Bereich einer zwischen der ersten und zweiten Kopplungszone liegenden dritten Kopplungszone mit dem Meßrohr gekoppelt ist, und der einen im Bereich des Meßrohrs liegenden Massenschwerpunkt aufweist, sowie ein auslaßseitiger zweiter Ausleger, der im Bereich einer zwischen der ersten und zweiten Kopplungszone liegenden vierten Kopplungszone mit dem Meßrohr gekoppelt ist, und der einen im Bereich des Meßrohrs liegenden Massenschwerpunkt aufweist, vorgesehen sind. Jeder der beiden Ausleger ist dafür vorgesehen, Ausgleichsschwingungen auszuführen, die so ausgebildet sind, daß die Querimpulse kompensiert werden und somit ein Massenmittelpunkt eines aus Meßrohr, Erregeranordnung, Sensoranordnung und den beiden Auslegern gebildeten Innenteils ortsfest gehalten wird. Ferner ist in der WO-A 99 40 394 ein Meßwandler der vorgenannten Art beschrieben, bei dem ein dem Erzeugen von den Querkräften einlaßseitig entgegenwirkenden Gegenkräften dienender erster Ausleger sowie ein dem Erzeugen von den Querkräften auslaßseitig entgegenwirkenden Gegenkräften dienender zweiter Ausleger vorgesehen sind. Dabei sind der erste Ausleger sowohl im Bereich der ersten Kopplungszone am Meßrohr als auch einlaßseitig am Wandlergehäuse und der zweite Ausleger sowohl im Bereich der zweiten Kopplungszone am Meßrohr als auch auslaßseitig am Wandlergehäuse fixiert, so daß die Gegenkräfte so ausgebildet sind, daß das Meßrohr trotz der erzeugten Querkräften in einer zugewiesenen statischen Ruhelage festgehalten wird. Schließlich sind in der US-B 66 91 583 und der US-B 68 40 109 jeweils Meßwandler gezeigt, bei denen jeweils ein im Bereich der ersten Kopplungszone im wesentlichen starr an Meßrohr, Gegenschwinger und Einlaßrohrstück fixierter erster Ausleger und ein im Bereich der zweiten Kopplungszone im wesentlichen starr an Meßrohr, Gegenschwinger und Auslaßrohrstück fixierter zweiter Ausleger vorgesehen sind. Die beiden, insb. symmetrisch zur Mitte des Meßrohrs angeordneten, Ausleger dienen hier dazu, im Ein- bzw. Auslaßrohrstück dynamisch Biegemomente zu erzeugen, wenn das vibrierende Meßrohr zusammen mit dem Gegenschwinger und insoweit auch die beiden Kopplungszonen aus ihrer jeweils zugewiesenen statischen Ruhelage lateral verschoben werden, wobei die Biegemomente so ausgebildet sind, daß im sich verformenden Einlaßrohrstück und im sich verformenden Auslaßrohrstück Impulse erzeugt werden, die den im vibrierenden Meßrohr erzeugten Querimpulsen entgegengerichtet sind. Die beiden Ausleger sind dafür so ausgebildet und im Meßwandler so angeordnet, daß ein im Bereich des Einlaßrohrstücks liegender Massenschwerpunkt des ersten Auslegers und ein im Bereich des Auslaßrohrstücks liegender Massenschwerpunkt des zweiten Auslegers, trotzdem das Meßrohr aus seiner zugewiesenen statischen Ruhelage lateral verschoben ist, im wesentlichen ortsfest in einer statischen Ruhelage verbleibt. Das Grundprinzip dieses Kompensationsmechanismus besteht darin, eher störend auf die Messungen und/oder die angeschlossene Rohrleitung wirkende laterale Verschiebebewegungen des vibrierenden Meßrohrs, die dessen primären, die MeßefFekte bewirkenden Verformungen überlagert sind, in den Meßwandler dynamisch ausbalancierende, gegenläufige Verformungen des Ein- und Auslaßrohrstücks umzuwandeln und so weitgehend zu eliminieren. Durch eine geeignete Abstimmung des Innenteils können die Verformungen von Ein- und Auslaßrohrstück so ausgebildet werden, daß die Querimpulse weitgehend unabhängig von momentanen Schwingungsamplituden und/oder -frequenzen des Meßrohrs einander kompensieren. In entsprechender Weise können somit auch die durch das vibrierende Meßrohr erzeugten Querkräfte mittels vom sich verformenden Einlaßrohrstück und vom sich verformenden Auslaßrohrstück erzeugter Querkräfte im wesentlichen kompensiert werden.

Untersuchungen an Meßaufnehmern der beschriebenen Art haben allerdings ergeben, daß trotzdem das Innenteil im obigen Sinne auch bei schwankender Dichte nahezu perfekt mechanisch ausbalancierbar ist, nach wie vor erheblich Störungen in den Schwingungsmeßsignale auftreten können. Im besonderen hat sich zunächst gezeigt, daß diese Störungen nicht nur gleichfrequent zu den Schwingungen des Meßrohrs sondern daß sich diese Störungen unglücklicherweise auch direkt in der für die Massendurchflußmessung essentielle Phasendifferenz niederschlagen und somit zu einer nicht unerheblichen Verfälschung des Meßergebnisses führen können. Zudem können diese Störungen in eher nicht reproduzierbarer und insoweit nicht ohne weiteres vorhersehbarer Weise auftreten. Damit einhergehend ist eine nachträgliche, beispielsweise auch algorithmische, Kompensation dieser Störungen der Meßsignale nahezu unmöglich. Weiterführende Untersuchungen haben zudem gezeigt, daß die Störungen der vorgenannten Art zumindest mittelbar von den oben genannten Anschlußleitungen verursacht sind.

Ferner hat sich gezeigt, daß besonders in den Abschnitten der Anschlußleitungen, die zwischen dem Innenteil und dem Wandlergehäuse praktisch freischwingend verlegt sind, bei schwingendem Innenteil aufgrund von Relativbewegungen der einzelnen Anschlußleitungen untereinander, kapazitive und induktive Leitungs- und/oder Streuimpedanzen im zeitlichen Verlauf verändert und infolgedessen Störspannungen bzw. -ströme direkt in den Anschlußleitungen induziert werden. Darüber hinaus ist erkannt worden, daß bei herkömmlicher Verlegung der Anschlußleitungen - beispielsweise entlang eines Abschnitts des Gegenschwingers weiter über eine zwischen zwei Abspannpunkten für die jeweilige Anschlußleitung gebildete "Freiluftstrecke" hin zum Wandlergehäuse - allein aufgrund der Dämpfungswirkung der vergleichsweise dünnen, bewegten Leitungsdrähte und -isolierungen jedem der beiden Sensorsignale eine zusätzliche Phasenverschiebung aufgeprägt wird, und zwar in einer die Phasendifferenz verändernden Weise; dies im besonderen auch trotz wirksamer Unterdrückung lateraler Verschiebungen des mittels Meßrohr und Gegenschwinger gebildeten Innenteils relativ zum Wandlergehäuse infolge schwankender Dichte. Anders gesagt wird durch die Anschlußleitung der Nullpunkt des Meßwandlers insoweit beeinflußt, daß auch bei nicht von Medium durchströmtem Meßrohr vom Meßwandler fälschlicherweise ein von Null verschiedener Massendurchfluß detektiert würde. Erschwerend kommt hinzu, daß diese durch die Anschlußleitungen verursachten Nullpunktverschiebungen in durchaus erheblichem Maße von der Betriebstemperatur und/oder -dauer des Meßaufnehmers abhängig sind.

Im Zusammenhang mit den von den Anschlußleitungen verursachten Störungen hat sich im besonderen vorgenannte "Freiluftstrecke" als störungsverursachender und insoweit für die Meßgenauigkeit neuralgischer Bereich herausgestellt, dies überraschender Wiese auch für solche Innteile mit einem vergleichsweise massiven und schweren Gegenschwinger. In vorgenanntem Bereich nämlich sind Innenteil und Wandlergehäuse über die Anschlußleitungen, zwar eher schwach, jedoch für die vorgenannte Nullpunktinstabilität in nicht unerheblichem Maße miteinander mechanisch gekoppelt. Durch die Relativbewegung der beiden, die freischwingenden Leitungsabschnitte jeweils abfangenden Abspannpunkte bei schwingendem Innenteil entfalten die dadurch zwangsläufig verformten und/oder bewegten Leitungsabschnitte ihre Dämpfungswirkung dabei unglücklicherweise in der Weise, daß die Phasendifferenz zwischen den beiden Sensorsignalen verändert wird. Es konnte hierbei zwar festgestellt werden, daß durch Zusammenfassen der Anschlußleitungen zu einem Kabelbaum einhergehend mit einer Plazierung des einen der vorgenannten Abspannpunkte nahe eines Schwingungsknoten des oben erwähnten Coriolis-Modes - also praktisch am Zentrum des Gegenschwingers - eine gewisse Verringerung der Störungen erzielt werden kann. Allerdings war leider auch festzustellen, daß vorgenannter Nullpunktfehler schon bei einer sehr geringen Abweichung von der perfekt mittigen Position, insb. auch in der Größenordnung fertigungs- und/oder montagetechnisch darstellbarer Toleranzen, und damit einhergehend einer geringfügigen Exzentrizität der wirksamen Dämpfungskraft oder auch einer geringfügigen Asymmetrie eines Dämpfungskraftbelages bezüglich des erwähnten Schwingungsknotens wieder von beträchtlichem Ausmaß ist; dies bei einem mit erheblicher Amplitude oszillierendem Gegenschwinger um so mehr.

Im übrigen ist vorgenannte "Freiluftstrecke" wegen der über die gesamte Betriebsdauer gesehen hohen Schwingspielzahl des Innenteils auch ein mechanisch hoch beanspruchter Teil der Anschlußleitungen, dem durch eine entsprechende Auswahl widerstandsfähiger Materialien für die Leitungsdrähte und -isolierungen wie auch eine entsprechende Materialstärke Rechnung zu tragen ist. Dementsprechend können die Anschlußleitungen sowohl aus Gründen der elektrischen wie auch der mechanischen Festigkeit nicht beliebig dünn gehalten sein und damit einhergehend im Sinne des Nullpunktfehlers nicht ohne weiteres mechanisch unwirksam gemacht werden.

Eine Aufgabe der Erfindung besteht daher darin, die Art der Halterung und Verlegung von Anschlußleitungen für Meßaufnehmer vom Vibrationstyp dahingehend zu verbessern, daß der schädliche Einfluß der Anschlußleitungen auf die Meßgenauigkeit von solchen Meßaufnehmern, insb. auf deren jeweiligen Nullpunkt, weitgehend unterdrückt oder zumindest deutlich minimiert werden kann.

Zur Lösung der Aufgabe besteht die Erfindung in einem Meßwandler vom Vibrationstyp für ein in einer Rohrleitung strömendes Medium. , welcher Meßwandler ein im Betrieb zumindest zeitweise vibrierendes Meßrohr zum Führen des Mediums, wobei das Meßrohr über ein einlaßseitig einmündendes Einlaßrohrstück und über ein auslaßseitig einmündendes Auslaßrohrstück mit der Rohrleitung kommuniziert, einen Gegenschwinger, der unter Bildung einer ersten Kopplungszone einlaßseitig am Meßrohr fixiert ist und der unter Bildung einer zweiten Kopplungszone auslaßseitig am Meßrohr fixiert ist, einen ersten Ausleger, der im Bereich der ersten Kopplungszone mit dem Einlaßrohrstück und dem Meßrohr gekoppelt ist, und der einen im Bereich des Einlaßrohrstücks liegenden Massenschwerpunkt aufweist, und einen zweiten Ausleger, der im Bereich der zweiten Kopplungszone mit dem Auslaßrohrstück und dem Meßrohr gekoppelt ist, und der einen im Bereich des Auslaßrohrstücks liegenden Massenschwerpunkt aufweist, eine zumindest anteilig am Gegenschwinger gehalterte Sensoranordnung zum Erfassen von Schwingungen zumindest des Meßrohrs, eine zumindest anteilig am Gegenschwinger gehalterte Erregeranordnung zum Antreiben zumindest des Meßrohrs, ein am Einlaßrohrstück und am Auslaßrohrstück fixiertes Wandlergehäuse, sowie Anschlußleitungen, insb. für die Erregeranordnung und/oder für die Sensoranordnung, umfaßt, von welchen Anschlußleitungen wenigstens eine zumindest punktuell an einem mittels Meßrohr, Gegenschwinger und den beiden Auslegern gebildeten Innenteil des Meßwandlers und zumindest punktuell am Wandlergehäuse gehaltert ist. Darüber hinaus ist beim erfindungsgemäßen Meßwandler vorgesehen, daß das Meßrohr im Betrieb zumindest zeitweise Biegeschwingungen um eine gedachte Biegeschwingungsachse ausführt, die die beiden Kopplungszonen imaginär miteinander verbindet. Nach einer Weiterbildung dieser Ausgestaltung der Erfindung ist vorgesehen, daß auch der Gegenschwinger im Betrieb zumindest zeitweise Biegeschwingungen um eine Biegeschwingungsachse ausführt, daß ein Abschnitt zumindest der einen an Innenteil und Wandlergehäuse gehalterten Anschlußleitung zwischen zwei voneinander beabstandeten, selbige Anschlußleitung punktuell fixierende Abspannpunkten freischwingend verläuft, von denen ein erster Abspannpunkt auf dem Innenteil des Meßwandlers und ein zweiter Abspannpunkt am Wandlergehäuse angeordnet ist, und daß die beiden Abspannpunkte so angeordnet sind, daß ein relativer Abstand dazwischen auch bei vibrierendem Meßrohr im wesentlichen unverändert bleibt, und daß die wenigstens eine an den Abspannpunkten gehalterte Anschlußleitung zumindest anteilig, insb. überwiegend, entlang einer sich bei biegeschwingendem Gegenschwinger im wesentlichen nicht verzerrenden neutralen Faser des Gegenschwingers an selbigem fixiert ist.

Des weiteren besteht die Erfindung in einem, beispielsweise als Coriolis-Massendurchflußmeßgerät, Dichtemeßgerät, Viskositätsmeßgerät oder dergleichen ausgebildten, In-Line-Meßgerät zum Messen und/oder Überwachen wenigstens eines Parameters, beispielsweise eines Massendurchflusse einer Dichte und/oder einer Viskosität, eines in einer Rohrleitung strömenden Mediums, in welchem In-Line-Meßgerät ein Meßwandler der oben genannten Art Verwendung findet.

Nach einer ersten Ausgestaltung der Erfindung ist vorgesehen, daß der zwischen den beiden Abspannpunkten verlaufende Abschnitt der wenigstens einen Anschlußleitung im wesentlichen freischwingend verlegt ist.

Nach einer zweiten Ausgestaltung der Erfindung ist vorgesehen, daß der zwischen den beiden Abspannpunkten verlaufende Abschnitt der wenigstens Anschlußleitung im wesentlichen, insb. dauerhaft, frei von Zugspannungen gehalten ist.

Nach einer dritten Ausgestaltung der Erfindung ist vorgesehen, daß zumindest die wenigstens eine an den Abspannpunkten gehalterte Anschlußleitung im weiteren Verlauf auch entlang zumindest eines Abschnitts des Gegenschwingers verlegt und zumindest punktuell daran fixiert ist.

Nach einer vierten Ausgestaltung der Erfindung ist vorgesehen, daß zumindest die wenigstens eine an den zwei Abspannpunkten gehalterte Anschlußleitung im weiteren Verlauf auch entlang einer inneren Wandoberfläche des Wandlergehäuses verlegt und zumindest punktuell daran fixiert ist.

Nach einer fünfte Ausgestaltung der Erfindung ist vorgesehen, daß der Meßrohr und Gegenschwinger im Betrieb zumindest zeitweise und/oder anteilig in einem Nutzmode lateral oszillieren, in dem sie im wesentlichen koplanare Biegeschwingungen in einer gemeinsamen gedachten Schwingungsebene ausführen. Nach einer Weiterbildung dieser Ausgestaltung ist ferner vorgesehen, daß die wenigstens eine an den zwei Abspannpunkten gehalterte Anschlußleitung zumindest anteilig außerhalb der gemeinsamen Schwingungsebene von Meßrohr und Gegenschwinger auch am Gegenschwinger fixiert ist.

Nach einer sechsten Ausgestaltung der Erfindung ist vorgesehen, daß die wenigstens eine am Ausleger gehalterte Anschlußleitung zumindest anteilig, insb. überwiegend, entlang einer sich bei biegeschwingendem Gegenschwinger im wesentlichen nicht verzerrenden neutralen Faser des Gegenschwingers an selbigem fixiert ist.

Nach einer siebenten Ausgestaltung der Erfindung ist vorgesehen, daß das Meßrohr im wesentlichen gerade ist. Nach einer Weiterbildung dieser Ausgestaltung der Erfindung sind Meßrohr und Gegenschwinger zueinander im wesentlichen koaxial ausgerichtet.

Nach einer achten Ausgestaltung der Erfindung ist vorgesehen, daß Meßrohr im wesentlichen gerade ist und im Betrieb zumindest zeitweise Biegeschwingungen um eine Biegeschwingungsachse und zumindest zeitweise Torsionsschwingungen um eine mit der Biegeschwingungsachse im wesentlichen parallelen, insb. koinzidierenden, Torsionsschwingungsachse ausführt.

Nach einer neunten Ausgestaltung der Erfindung ist vorgesehen, daß das Meßrohr im Betrieb zumindest zeitweise Biegeschwingungen um eine gedachte Biegeschwingungsachse und jeder der beiden Ausleger im Betrieb zumindest zeitweise Drehschwingungen um eine im wesentlichen quer zur Biegeschwingungsachse verlaufende gedachte Drehachse ausführen.

Nach einer zehnten Ausgestaltung der Erfindung ist vorgesehen, daß das Meßrohr im Betrieb zumindest zeitweise Biegeschwingungen um eine gedachte Biegeschwingungsachse ausführt und daß die Kopplungszonen bei vibrierendem Meßrohr zumindest zeitweise lateral aus einer statischen Ruhelage bewegt sind. Ferner sind die Ausleger dabei so ausgebildet, daß jeder der beiden Ausleger infolge des lateralen Bewegens der Kopplungszonen Drehschwingungen um eine im wesentlichen quer zur Biegeschwingungsachse verlaufende, imaginäre Drehachse ausführt. Im besonderen weist jeder der beiden Ausleger wenigstens einen Ruhepunkt aufweist, der auch bei lateral bewegten Kopplungszonen im wesentlichen ortsfest in einer zugehörigen statischen Ruhelage verharrt und/oder der einen relativen Abstand zu einem sowohl vom Einlaßrohrstück als auch vom Auslaßrohrstück entfernten Bereich des Wandlergehäuses im wesentlichen beibehält. Nach einer Weiterbildung dieser Ausgestaltung der Erfindung ist ferner vorgesehen, daß die wenigstens eine am Ausleger gehalterte Anschlußleitung zumindest anteilig innerhalb von dessen wenigstens einem Ruhebereich gehaltert ist. Alternativ oder in Ergänzung dazu ist vorgesehen, daß ein Abschnitt der wenigstens einen am Ausleger gehalterten Anschlußleitung zwischen zwei Abspannpunkten im wesentlichen freischwingend verläuft, von denen zumindest ein erster Abspannpunkt auf dem die Anschlußleitung halternden Ausleger, insb. innerhalb von dessen wenigstens einem Ruhebereich und/oder mit dem wenigstens einen Ruhepunkt koinzidierend, angeordnet ist. Ein zweiter Abspannpunkt für die wenigstens eine am Ausleger gehalterte Anschlußleitung kann dabei, insb. *vis-a-vis* des ersten Abspannpunktes, am Wandlergehäuse angeordnet sein.

Nach einer elften Ausgestaltung der Erfindung ist vorgesehen, daß die wenigstens eine am Ausleger gehalterte Anschlußleitung zumindest anteilig, insb. überwiegend, adhäsiv am Ausleger fixiert ist.

Nach einer zwölften Ausgestaltung der Erfindung ist vorgesehen, daß am ersten Ausleger zumindest eine erste Anschlußleitung und am zweiten Ausleger eine zweite Anschlußleitung gehaltert sind.

Nach einer dreizehnten Ausgestaltung der Erfindung ist ferner vorgesehen, daß die beiden Anschlußleitungen zumindest entlang des jeweils halternden Auslegers in gleicher Weise verlegt und/oder zumindest am jeweils halternden Ausleger in gleicher Weise fixiert und/oder zueinander im wesentlichen symmetrisch, insb. zumindest bezüglich einer Trägheitshauptachse des Gegenschwingers spiegelsymmetrisch, verlegt sind.

Nach einer vierzehnten Ausgestaltung der Erfindung ist vorgesehen, daß der erste Abspannpunkt auf einem der Ausleger plaziert ist, so daß die zumindest eine an den zwei Abspannpunkten gehalterte Anschlußleitung an wenigstens einem der beiden Ausleger fixiert ist. Nach einer Weiterbildung dieser Ausgestaltung der Erfindung ist zudem vorgesehen, daß die wenigstens eine an den zwei Abspannpunkten gehalterte Anschlußleitung zumindest anteilig außerhalb einer gemeinsamen Schwingungsebene von Meßrohr und Gegenschwinger am Ausleger fixiert ist. Dabei kann der der auf dem die Anschlußleitung halternden Ausleger plazierte erste Abspannpunkt mit dem wenigstens einen Ruhepunkt koinzidieren oder zumindest innerhalb wenigstens einen Ruhebereichs des Auslegers angeordnet sein. Desweiteren kann die wenigstens eine zwischen den zwei Abspannpunkten gehalterte Anschlußleitung dabei zumindest anteilig adhäsiv am Ausleger fixiert sein und/oder kann der zweite Abspannpunkt für die wenigstens eine am Ausleger gehaltene Anschlußleitung *vis-a-vis* des ersten Abspannpunktes am Wandlergehäuse angeordnet sein.

Nach einer fünfzehnten Ausgestaltung der Erfindung ist vorgesehen, daß sämtliche Anschlußleitungen am selben Ausleger gehalten sind.

Nach einer sechzehnten Ausgestaltung der Erfindung ist vorgesehen, daß zumindest zwei der Anschlußleitungen zu einem Leitungspaar zusammengefaßt sind, und daß das wenigstens eine Leitungspaar an zumindest einem der Ausleger gehalten ist.

Nach einer siebzehnten Ausgestaltung der Erfindung umfaßt der Meßwandler weiters wenigsten einen am Gegenschwinger fixierten Temperatursensor sowie Anschlußleitungen dafür.

Nach einer achtzehnten Ausgestaltung der Erfindung umfaßt die Erregeranordnung wenigsten eine Spule sowie Anschlußleitungen dafür. In vorteilhafter Weise ist die wenigstens eine Spule der Erregeranordnung mit dem Gegenschwinger mechanisch, insb. starr, gekoppelt.

Nach einer neunzehnten Ausgestaltung der Erfindung umfaßt die Sensoranordnung wenigsten eine Spule sowie Anschlußleitungen dafür. In vorteilhafter Weise ist die wenigstens eine Spule der Sensoranordnung mit dem Gegenschwinger mechanisch, insb. starr, gekoppelt.

Nach einer zwanzigsten Ausgestaltung der Erfindung umfaßt der Meßwandler weiters wenigsten einen am Meßrohr fixierten Temperatursensor und/oder wenigstens einen am Meßrohr fixierten Dehnungssensor sowie Anschlußleitungen dafür.

Nach einer einundzwanzigsten Ausgestaltung der Erfindung ist vorgesehen, daß zumindest die wenigstens eine zwischen den zwei Abspannpunkten gehalterte Anschlußleitung im Betrieb zumindest zeitweise elektrischen Strom führt.

Nach einer zweiundzwanzigsten Ausgestaltung der Erfindung ist vorgesehen, daß an einem der beiden Ausleger sämtliche der Anschlußleitungen gehaltert sind.

Nach einer dreiundzwanzigsten Ausgestaltung der Erfindung ist vorgesehen, daß entweder an jedem der beiden Ausleger zumindest eine der Anschlußleitungen gehaltert ist oder daß an einem der beiden Ausleger keine der Anschlußleitungen gehaltert ist.

Nach einer vierundzwanzigsten Ausgestaltung der Erfindung ist vorgesehen, daß das Meßrohr zumindest teilweise vom Gegenschwinger ummantelt ist.

Nach einer fünfundzwanzigsten Ausgestaltung der Erfindung ist vorgesehen, daß der Gegenschwinger im wesentlichen rohrförmig ist.

Nach einer sechsundzwanzigsten Ausgestaltung der Erfindung ist vorgesehen, daß Meßrohr, Einlaßrohrstück und dem Auslaßrohrstück jeweils durch Segmente eines einzigen, einstückigen Rohres gebildet sind.

Nach einer siebenundzwanzigsten Ausgestaltung der Erfindung ist vorgesehen, daß jeder der Ausleger zumindest anteilig unmittelbar am Gegenschwinger fixiert ist.

Nach einer achtundzwanzigsten Ausgestaltung der Erfindung ist vorgesehen, daß jeder der Ausleger mittels einer auf den Gegenschwinger aufgeschobenen Hülse gebildet ist.

Nach einer neunundzwanzigsten Ausgestaltung der Erfindung ist vorgesehen, daß jeder der beiden Ausleger eine Masse aufweist, die mindestens gleich der Masse des Gegenschwingers ist.

Nach einer dreißigsten Ausgestaltung der Erfindung ist vorgesehen, daß jeder der beiden Ausleger eine Masse aufweist, die kleiner ist als ein 5-faches der Masse des Gegenschwingers.

Nach einer einunddreißigsten Ausgestaltung der Erfindung ist vorgesehen, daß jeder der beiden Ausleger im wesentlichen röhrenförmig oder hülsenförmig ausgebildet ist. Nach einer Weiterbildung dieser Ausgestaltung der Erfindung ist ferner vorgesehen, daß jeder der Ausleger eine größte Wandstärke aufweist, die größer als eine größte Wandstärke des Gegenschwingers ist. Gegebenenfalls kann jeder der Ausleger zudem auch eine kleinste Wandstärke aufweisen, die größer als eine größte Wandstärke des Gegenschwingers ist.

Nach einer siebenten Ausgestaltung der Erfindung ist vorgesehen, daß Einlaßrohrstück und Auslaßrohrstück im wesentlichen gerade sind. Nach einer Weiterbildung dieser Ausgestaltung der Erfindung ist ferner vorgesehen, daß Einlaßrohrstück und Auslaßrohrstück zueinander sowie zu einer die beiden Kopplungszonen imaginär verbindenden Längsachse des Meßwandlers im wesentlichen fluchtend ausgerichtet sind.

Ein Grundgedanke der Erfindung besteht darin, den Abspannpunkt für die Anschlußleitungen, an dem diese am Innenteil mechanisch wirksam angelenkt sind, in solche Bereiche des Innenteils zu verlagern, die im Betrieb kaum oder in vernachlässigbarem Maße relativ zu einander bewegt sind und so einen sehr geringen Einfluß auf den Nullpunkt des Meßwandlers haben. Es konnte zudem festgestellt werden, daß die Kopplungszonen und/oder die an das Meßrohr gekoppelten Ausleger dafür besonders geeignet sind. Die u.a. auch deshalb, weil diese Bereiche des Innenteils im Betrieb, insb. auch bei schwankender Dichte des zu messenden Mediums, relativ zum umgebenden Wandlergehäuse wenig oder sogar überhaupt nicht bewegt werden. Zudem kann das Innenteil in vorteilhafter sogar so dimensioniert und abgestimmt werden, daß zumindest die Ausleger Ruhepunkte aufweisen, die trotz lateral bewegter Kopplungszonen, beispielsweise infolge von veränderlicher Mediumsdichte, im wesentlichen in einer beim Einbau zugewiesenen Ruhelage verharren. Weitere Verbesserungen der Nullpunktstabilität des Meßwandlers können ferner dadurch erreicht werden, daß die Anschlußleitungen entlang des Gegenschwingers, insb. auf einer von dessen im Betrieb im wesentlichen nicht verzerrten neutralen Fasern, verlegt und dabei im wesentlichen symmetrisch geführt werden, insb. spiegelsymmetrisch bezüglich zumindest einer Trägheitshauptachse des Gegenschwingers - beispielsweise einer im wesentlichen senkrecht zu einer Längsachse des Meßrohrs und/oder des Gegenschwingers verlaufenden.

Ein Vorteil der Erfindung besteht darin, daß durch die Positionierung der Abspannpunkte für die jeweilige Anschlußleitung an lateral vergleichsweise wenig bewegten Abschnitten des Innenteils infolge der vergleichsweise geringen mechanischen Belastung derselben nicht nur eine erhebliche Stabilisierung des Nullpunkts sondern auch Verbesserung der Betriebsfestigkeit des Meßwandler erzielt werden kann.

Nachfolgend werden die Erfindung und weitere Vorteile anhand eines Ausführungsbeispiels erläutert, das in den Figuren der Zeichnung dargestellt ist. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.

Fig. 1 zeigt ein in eine Rohrleitung einfügbares In-Line-Meßgerät zum Messen wenigstens eines Parameters eines in der Rohrleitung geführten Mediums,

Fig. 2 zeigt ein Ausführungsbeispiel für einen für das In-Line-Meßgerät von Fig. 1 geeigneten Meßwandler vom Vibrations-Typ mit einem Meßrohr und einem Gegenschwinger sowie endseitigen Auslegern in einer perspektivischen Seitenansicht,

Fig. 3a, b zeigen den Meßwandler von Fig. 2 geschnitten in zwei verschiedenen Seitenansichten,

Fig. 4 zeigt den Meßwandler von Fig. 2 in einem ersten Querschnitt,

Fig. 5 zeigt den Meßwandler von Fig. 2 in einem zweiten Querschnitt,

Fign. 6 zeigen schematisch Biegelinien des Meßrohrs und eines

a bis d Gegenschwingers in einem lateralen Biegeschwingungsmode oszillierend,

Fig. 7a, b zeigen in verschiedenen, teilweise geschnittenen Ansichten eine Ausgestaltung für einen endseitigen Ausleger eines Meßwandlers gemäß Fig. 2,

Fig. 8 zeigt schematisch einen Ausschnitt des Meßwandlers mit gemäß Fig. 6c) vibrierendem Meßrohr, und

Fig. 9 zeigt eine vergleich zum Ausführungsbeispiel von Fig. 2 etwas abgeänderte Variante eines Meßwandler vom Vibrations-Typ.

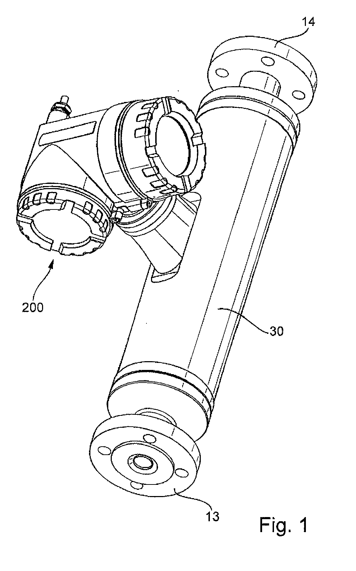

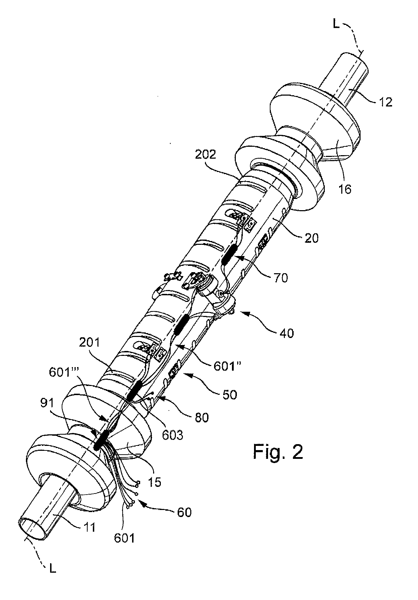

In der Fig. 1 ist ein in eine - hier nicht dargestellte - Rohrleitung einfügbares, beispielsweise als Coriolis-Massendurchflußmeßgerät, Dichtemeßgerät, Viskositätsmeßgerät oder dergleichen ausgebildetes, In-Line-Meßgerät gezeigt, das dem Messen und/oder Überwachen wenigstens eines Parameters, beispielsweise einem Massendurchfluß, einer Dichte, einer Viskosität etc., eines in der Rohrleitung strömenden Mediums dient. Das In-Line-Meßgerät umfaßt dafür einen an eine in einem entsprechenden Elektronik-Gehäuse 200 untergebrachte - hier nicht dargestellte - Betriebs- und Auswerteelektronik des In-Line-Meßgerät elektrisch angeschlossenen Meßwandler vom Vibrationstyp, der im Betrieb entsprechend vom zu messenden Medium durchströmt ist. In den Fig. 2 bis 5 sind entsprechende Ausführungsbeispiele und Ausgestaltungen für solche Meßwandler vom Vibrationstyp schematisch dargestellt. Darüber hinaus sind der prinzipielle mechanische Aufbau sowie dessen Wirkungsweise mit den denen der in den US-B 66 91 583 oder US-B 68 40 109 gezeigten Meßwandler vergleichbar. Der Meßwandler dient dazu, in einem hindurchströmenden Medium mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so in der dem Fachmann bekannten Weise z.B. ein Massedurchfluß $m$, eine Dichte $r$ und/oder eine Viskosität h des Mediums gemessen werden.

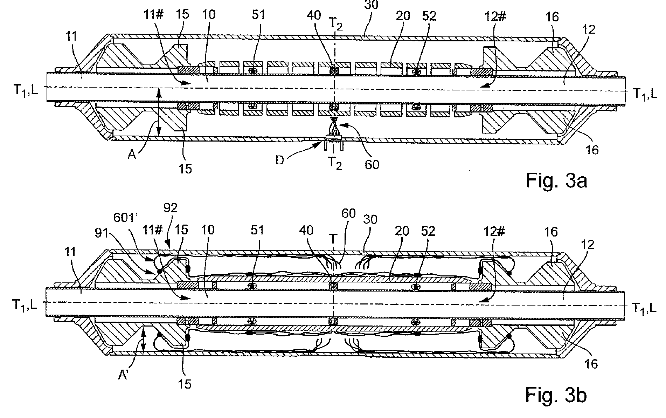

Zum Führen des Mediums umfaßt Meßwandler ein - im gezeigten Ausführungsbeispiel einziges, im wesentlichen gerades - Meßrohr 10, das im Betrieb vibrieren gelassen und dabei, um eine statische Ruhelage oszillierend, wiederholt elastisch verformt wird. Zur Minimierung von auf das Meßrohr 10 wirkenden Störeinflüssen wie auch zur Reduzierung von seitens des Meßwandlers an die angeschlossene Rohrleitung abgegebener Schwingungsenergie ist im Meßwandler des weiteren ein - hier im wesentlichen parallel zum Meßrohr 10 verlaufender-Gegenschwinger 20 vorgesehen. Dieser ist, wie auch in Fig. 3 gezeigt, unter Bildung einer - praktisch ein Einlaßende des Meßrohrs 10 definierenden - ersten Kopplungszone 11# einlaßseitig und der unter Bildung einer - praktisch ein Auslaßende des Meßrohrs 10 definierenden - zweiten Kopplungszone 12# auslaßseitig jeweils am Meßrohr 10 fixiert. Der Gegenschwinger 20 kann rohr - oder kastenförmiger ausgeführt und beispielsweise so am Einlaßende und am Auslaßende mit dem Meßrohr 10 verbunden sein, daß er, wie aus der Zusammenschau von Fig. 2 und 3 ersichtlich, im wesentlichen koaxial zum Meßrohr 10 ausgerichtet ist und somit das Meßrohr 10 vom Gegenschwinger 20 ummantelt ist. Zudem ist der Gegenschwinger 20 im vorliegenden Ausführungsbeispiel wesentlich schwerer ausgelegt als das Meßrohr 10.

Zum Hindurchströmenlassen des zu messenden Mediums ist das Meßrohr 10 über ein einlaßseitig im Bereich der ersten Kopplungszone einmündendes Einlaßrohrstück 11 und über ein auslaßseitig im Bereich der zweiten Kopplungszone einmündendes, insb. zum Einlaßrohrstück 11 im wesentlichen identisches, Auslaßrohrstück 12 entsprechend an die das Medium zu- bzw. abführende - hier nicht dargestellte - Rohrleitung angeschlossen. Einlaßrohrstück 11 und Auslaßrohrstück 12 sind im gezeigten Ausführungsbeispiel wesentlichen gerade ausgeführt und zueinander, zum Meßrohr 10 sowie zu einer die Kopplungszonen praktisch verbindenden imaginären Längsachse L fluchtend ausgerichtet. Gemäß einer Ausgestaltung der Erfindung entspricht eine Länge, $L_{11}$, des Einlaßrohrstücks 11 sowie eine Länge, $L_{12}$, des Auslaßrohrstücks 12 jeweils höchstens einem 0,5-fachen einer Länge, $L_{10}$, des Meßrohrs 10. Um einen möglichste kompakten Meßwandler bereitstellen zu können weisen im besonderen sowohl das Einlaßrohrstück 11 eine Länge, $L_{11}$, als auch das Auslaßrohrstück 12 eine Länge, $L_{12}$, auf, die jeweils kleiner als ein 0,4-faches einer Länge, $L_{10}$, des Meßrohrs 10 ist.

In vorteilhafter Weise können Meßrohr 10, Einlaß- und Auslaßrohrstück 11, 12 einstückig ausgeführt sein, so daß zu deren Herstellung z.B. ein einziges rohrförmiges Halbzeug dienen kann. Anstelle dessen, daß Meßrohr 10, Einlaßrohrstück 11 und Auslaßrohrstück 12 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden.

Wie in Fig. 2 und 3 schematisch dargestellt, umfaßt der erfindungsgemäße Meßwandler ferner einen im Bereich der ersten Kopplungszone mit dem Einlaßrohrstück 11 und dem Meßrohr 10 gekoppelten ersten Ausleger 15, der einen im Bereich des Einlaßrohrstücks 11 liegenden Massenschwerpunkt $M_{15}$ aufweist, sowie einen im Bereich der zweiten Kopplungszone mit dem Auslaßrohrstück 12 und dem Meßrohr 10 gekoppelten zweiten Ausleger 16, der einen im Bereich des Auslaßrohrstücks 12 liegenden Massenschwerpunkt $M_{16}$ aufweist. Anders

gesagt, sind die beiden, insb. im wesentlichen baugleichen, ggf. sogar einander identischen, Ausleger 15, 16 so im Meßwandler angeordnet, daß der jeweilige Masseschwerpunkt $M_{15}$, $M_{16}$ vom Meßrohr 10, insb. in dessen Flucht liegend, beabstandet ist. Die beiden Ausleger 15, 16 sind also insoweit exzentrisch am Ein- bzw. Auslaßrohrstück und entsprechend exzentrisch auch an Meßrohr 10 und Gegenschwinger 20 gehalten. Nach einer weiteren Ausgestaltung der Erfindung ist der Ausleger 15 so geformt und am Meßrohr 10 angebracht, daß dessen Massenschwerpunkt $M_{15}$ im wesentlichen in einem Bereich einer halben Länge des Einlaßrohrstücks 11 liegt und ist der Ausleger 16 so geformt und am Meßrohr 10 angebracht, das dessen Massenschwerpunkt $M_{16}$ im wesentlichen in einem Bereich einer halben Länge des Auslaßrohrstücks 12 liegt. Um ein möglichst kompakten Meßwandler zu erhalten ist gemäß einer Ausgestaltung der Erfindung vorgesehen, jeden der Ausleger 15, 16 so auszubilden, daß eine Länge, $L_{15}$ bzw. $L_{16}$, desselben höchsten einem 0,9-fachen einer Länge, $L_{11}$, des Einlaßrohrstücks 11 und einer Länge $L_{12}$, des Auslaßrohrstücks 12 und/oder höchstens einem 0,5-fachen einer Länge, $L_{10}$, des Meßrohrs 10 entspricht. Im besonderen ist jeder der Ausleger 15, 16 ferner so ausgeführt, daß die jeweilige Länge dabei auch möglichst kleiner als ein 0,4-faches der Länge, $L_{10}$, des Meßrohrs 10 ist. Das mittels des Meßrohrs 10, des Gegenschwingers 20, des Einlaßrohrstücks 11, des Auslaßrohrstücks 12 sowie der beiden Ausleger 15, 16 gebildete Innenteil des Meßwandlers ist, wie aus einer Zusammenschau von Fig. 1 und 3 ersichtlich, ferner in einem das Innenteil mediumsdicht und weitgehend druckfest umhüllendes Wandlergehäuse 30 schwingfähig gehalten, das am jeweils von den Kopplungszonen entfernten Ende des Ein- und Auslaßrohrstück 11, 12 entsprechend fixiert ist. Für den Fall, daß der Meßwandler lösbaren mit der Rohrleitung zu montieren ist, ist dem Einlaßrohrstück 11 und dem Auslaßrohrstück 12 jeweils ein erster bzw. zweiter Flansch 13, 14 entsprechend angeformt. Die Flansche 13, 14 können dabei gleichzeitig auch als integraler Bestandteil des Wandlergehäuses 30 ausgebildet sein. Falls erforderlich können Ein- und Auslaßrohrstück 11, 12 aber auch direkt mit der Rohrleitung, z.B. mittels Schweißen oder Hartlötung, verbunden werden.

Zur Herstellung der einzelnen Komponenten des vorgenannten Innenteils kann praktisch jedes der für solche Meßwandler üblichen Materialien, wie z.B. Stahl, Titan, Tantal, Zirkonium etc., oder auch entsprechende Kombinationen dieser Materialien verwendet werden. Beispielsweise hat sich die Verwendung von Titan für Meßrohr 10 sowie das Einlaßrohrstück 11 und das Auslaßrohrstück 12 als besonders geeignet gezeigt, während, beispielsweise aus Gründen der Kostenersparnis, sowohl für den Gegenschwinger 20 und die Ausleger 15, 16 als auch das Wandlergehäuse 30 die Verwendung von Stahl von Vorteil ist. Um eine möglichst einfache, kostengünstige Fertigung der Ausleger wie schließlich des Meßwandlers zu ermöglichen, kann jeder der beiden Ausleger 15, 16 beispielsweise im wesentlichen röhrenförmig oder hülsenförmig ausgebildet sein, so daß er praktisch mittels einer auf den Gegenschwinger 20 aufgeschobenen, insb. metallische, Hülse gebildet werden kann, insb. auch dann, wenn der Gegenschwinger 20 bereits mit dem Meßrohr 10 verbunden worden ist. Gemäß einer Weiterbildung dessen weist jeder der dabei den jeweiligen Ausleger 15, 16 bildenden Hülsen jeweils wenigstens eine Ringnut auf. Wie sich aus der Zusammenschau der Fig. 2 und 3 zwanglos ergibt, ist jede der wenigstens zwei Ringnuten beim vorliegenden Ausführungsbeispiel im wesentlichen koaxial, insb. konzentrisch, zu einer im wesentlichen zur Längsachse L parallelen Trägheitshauptachse des jeweiligen Auslegers 15, 16 ausgerichtet. Alternativ zu der Verwendung vorgenannter Hülsen für die Ausleger 15, 16 können diese aber auch zusammen mit dem Gegenschwinger 20 beispielsweise aber auch mittels eines einzigen rohrförmigen Halbzeugs einstückig oder mittels zweier Rohrhälften zweistückig gefertigt werden.

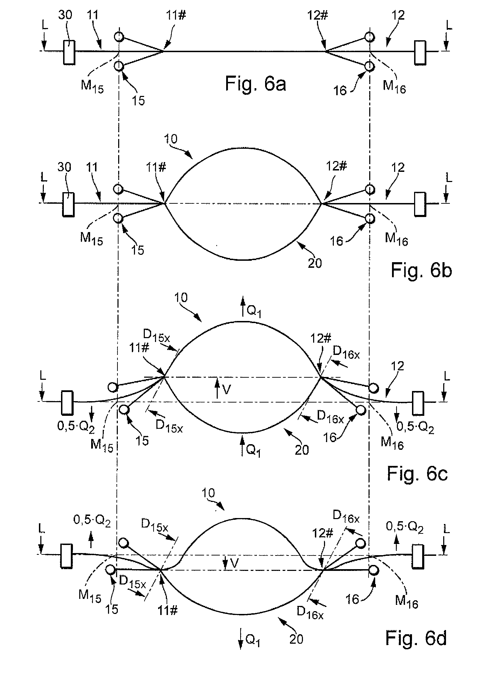

Im Betrieb des Meßwandlers wird das Meßrohr 10 - wie bereits mehrfach erwähnt - zumindest zeitweise zu lateralen Biegeschwingungen, insb. im Bereich einer natürlichen Resonanzfrequenz, so angeregt, daß es sich in diesem sogenannten Nutzmode im wesentlichen gemäß einer natürlichen ersten Eigenschwingungsform ausbiegt. Die Biegeschwingungen sind dabei im wesentlichen transversal zu einer mit der Längsachse L im wesentlichen parallelen, insb. koinzidierenden, Biegeschwingungsachse ausgerichtet, die die beiden Kopplungszonen 11#, 12# imaginär miteinander verbindet. Nach einer Ausgestaltung der Erfindung, wird das Meßrohr 10 dabei mit einer Schwingungsfrequenz, $f_{exc}$, angeregt, die möglichst genau einer natürlichen Resonanzfrequenz des sogenannten $f1$-Eigenmodes des Meßrohrs 10 entspricht, also einem symmetrischen Eigenmode bei dem, wie in Fign. 6 b) bis d) schematisch dargestellt, das vibrierende, jedoch nicht vom Medium durchströmte Meßrohr 10 bezüglich einer zur Längsachse senkrechten Mittelachse im wesentlichen symmetrisch ausgebogen wird und dabei im wesentlichen einen einzigen Schwingungsbauch aufweist. Gleichermaßen wird auch der Gegenschwinger 20, wie in Fig. 6b schematisch dargestellt, im Betrieb des Meßwandlers ebenfalls zu Biegeschwingungen angeregt, die im wesentlichen koplanar, jedoch im wesentlichen gegenphasig zu den Biegeschwingungen des Meßrohrs 10 ausgebildet sind. Somit oszillieren Meßrohr und Gegenschwinger im Betrieb also zumindest zeitweise und/oder anteilig lateral in einem Nutzmode, in dem sie im wesentlichen koplanare Biegeschwingungen in einer gemeinsamen gedachten Schwingungsebene ausführen.

Für den Fall, daß das Medium in der Rohrleitung strömt und somit der Massedurchfluß $m$ von Null verschieden ist, werden mittels des in vorgenannter Weise vibrierenden Meßrohrs 10 im hindurchströmenden Medium Corioliskräfte induziert. Diese wiederum wirken auf das Meßrohr 10 zurück und bewirken so eine zusätzliche, sensorisch erfaßbare - hier jedoch nicht dargestellte - Verformung des Meßrohrs 10 gemäß einer natürlichen zweiten Eigenschwingungsform, die dem angeregten Nutzmode im wesentlich koplanar überlagert ist. Die momentane Ausprägung der Verformung des Meßrohrs 10 ist dabei, insb. hinsichtlich ihrer Amplituden, auch vom momentanen Massedurchfluß $m$ abhängig. Als zweite Eigenschwingungsform, dem sogenannten Coriolismode, kann, wie bei derartigen Meßwandlern üblich, z.B. die Eigenschwingungsform des anti-symmetrischen $f2$-Eigenmodes, also jene mit zwei Schwingungsbäuchen und/oder die Eigenschwingungsform des anti-symmetrischen $f4$-Eigenmodes mit vier Schwingungsbäuchen dienen. Gemäß einer Ausgestaltung der Erfindung sind ferner Meßrohr 10 und Gegenschwinger 20 so dimensioniert, daß das leere Meßrohr 10 eine niedrigste natürliche Eigenfrequenz, $f_{10}$, aufweist, die größer oder etwa gleich einer niedrigsten natürlichen Eigenfrequenz, $f_{20}$, des Gegenschwingers 20 ist. Im besonderen sind Meßrohr 10 und Gegenschwinger 20 dabei so dimensioniert, daß das mit Wasser befüllte Meßrohr 10 eine niedrigste natürliche Eigenfrequenz, $f_{10,H2O}$, aufweist, die mindestens gleich einer niedrigsten natürlichen Eigenfrequenz, $f_{20}$, des Gegenschwingers 20 ist. Gemäß einer weiteren Ausgestaltung der Erfindung ist ferner vorgesehen, Meßrohr 10 und Gegenschwinger 20 hinsichtlich ihrer Schwingungseigenschaften so aufeinander abzustimmen, daß eine niedrigste natürliche Eigenfrequenz, $f_{10,\ H2O}$ Meßrohrs 10 auch dann mindestens einem 1,1-fachen einer niedrigsten natürlichen Eigenfrequenz, $f_{20}$, des Gegenschwingers 20 entspricht, wenn es vollständig mit Wasser befüllt ist. Bei einem Meßrohr 10 aus Titan mit einer Nennweite DN von etwa 55 mm, einer Länge, $L_{10}$, von etwa 570 mm und einer Wandstärke von etwa 2,5 mm würde eine natürliche Resonanzfrequenz, $f_{10,\ Luft}$, des $f1$-Eigenmodes des leeren Meßrohrs etwa bei 550 Hz liegen, während eine natürliche Resonanzfrequenz, $f_{10,\ H2O}$, des $f1$-Eigenmodes des mit Wasser befüllten Meßrohrs etwa 450 Hz betragen würde.

Gemäß einer weiteren Ausgestaltung der Erfindung sind Meßrohr 10 und Gegenschwinger 20 dafür ferner so dimensioniert, daß eine Masse, $m_{20}$, des Gegenschwingers 20 mindest einem 5-fachen einer Masse, $m_{10}$, des Meßrohrs 10 entspricht. Bei der Verwendung eines Rohres aus Stahl mit einem Außendurchmesser von etwa 100 mm und einer Wandstärke von etwa 10 mm würde sich unter Berücksichtigung des in der vorbeschriebenen Weise dimensionierten Meßrohrs für den Gegenschwingers 20 eine Masse, $m_{20}$, in der Größenordnung von etwa 10 kg ergeben.

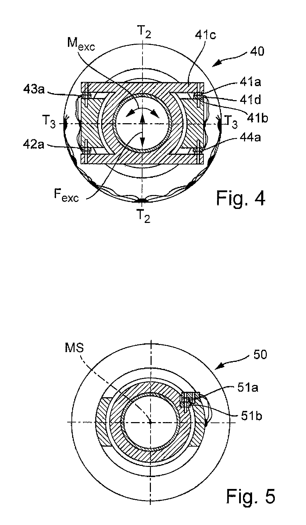

Nach einer Weiterbildung der Erfindung, führt das Meßrohr 10 ferner, insb. auch in Anlehnung an den in der US-B 68 40 109 gezeigten Meßwandler, im Betrieb zumindest zeitweise Torsionsschwingungen um eine mit der Längsachse L bzw. der vorgenannten Biegeschwingungsachse im wesentlichen parallelen, insb. koinzidierenden, Torsionsschwingungsachse aus. Torsionsschwingungsachse, Biegeschwingungsachse wie auch die Längsachse L können, wie bei derartigen Meßwandlern durchaus üblich, koinzident sein. Für das oben beschriebene Meßrohr 10 würde sich beispielsweise eine niedrigste natürliche Resonanzfrequenz für die Torsionsschwingungen im Bereich von etwa 750 Hz ergeben. Zum Erzeugen mechanischer Schwingungen des Meßrohrs 10 - seien es nun Biegeschwingungen und/oder Torsionsschwingungen - umfaßt der Meßwandler weiters eine, insb. elektrodynamische, Erregeranordnung 40. Diese dient dazu, eine mittels der Betriebs- und Auswerte-Elektronik eingespeiste, elektrische Erregerenergie $E_{exc}$, z.B. mit einem geregelten Strom und/oder einer geregelten Spannung, in eine auf das Meßrohr 10, z.B. pulsförmig oder harmonisch, einwirkende und dieses in der vorbeschriebenen Weise elastisch verformende Erregerkraft $F_{exc}$ umzuwandeln. Die Erregerkraft $F_{exc}$ kann hierbei, wie in Fig. 4 schematisch dargestellt, bidirektional oder aber auch unidirektional ausgebildet sein und in der dem Fachmann bekannten Weise z.B. mittels einer Strom- und/oder Spannungs-Regelschaltung, hinsichtlich ihrer Amplitude und, z.B. mittels einer Phasen-Regelschleife, hinsichtlich ihrer Frequenz eingestellt werden.

Als Erregeranordnung kann z.B. eine einfache differentiell auf Meßrohr 10 und Gegenschwinger 20 einwirkende Tauchspulenanordnung mit einer mechanisch, insb. starr, an den Gegenschwinger 20 gekoppelten zylindrischen Erregerspule, die im Betrieb von einem entsprechenden Erregerstrom durchflossen ist, und mit einem in die Erregerspule zumindest teilweise eintauchenden dauermagnetischen Anker, der von außen, insb. mittig, am Meßrohr 10 fixiert ist, dienen. Ferner kann die Erregeranordnung 40 z.B. auch als ein Elektromagnet oder, wie z.B. in der WO-A 99 51 946 gezeigt, als ein seismischer Erreger realisiert sein. Zum Detektieren von Schwingungen des Meßrohr 10 kann z.B. eine für derartige Meßwandler übliche Sensoranordnung verwendet werden, bei der in der dem Fachmann bekannten Weise mittels eines einlaßseitigen ersten Schwingungssensors 50A und mittels eines auslaßseitigen zweiten Schwingungssensors 50B die Bewegungen des Meßrohrs 10 erfaßt und in ein entsprechendes erstes bzw. zweites Sensorsignal $S_1$, $S_2$ umgewandelt werden. Als Sensoren 50A, 50B können z.B. die Schwingungen relativ zum Gegenschwinger, z.B. differentiell messende, elektrodynamische Geschwindigkeitssensoren oder aber elektrodynamische Wegsensoren oder Beschleunigungssensoren verwendet werden. Anstelle elektrodynamischer Sensoranordnungen oder in Ergänzung derselben können ferner auch mittels resistiver oder piezoelektrischer Dehnungsmeßstreifen messende oder opto-elektronische Sensoren zum Detektieren der Schwingungen des Meßrohrs 10 dienen.

Nach einer weiteren Ausgestaltung der Erfindung ist die Erregeranordnung 40, wie auch in Fig. 2 bis 4 gezeigt, so ausgebildet und so im Meßwandler angeordnet sein, daß sie im Betrieb gleichzeitig, insb. differentiell, auf Meßrohr 10 und Gegenschwinger 20 wirkt. Im in der Fig. 4 gezeigten Ausführungsbeispiel weist die Erregeranordnung 40 dazu wenigstens eine im Betrieb zumindest zeitweise vom Erregerstrom oder einem Erregerteilstrom durchflossene erste Erregerspule 41a auf, die an einem mit dem Meßrohr 10 verbundenen Hebel 41c fixiert ist und über diesen und einen von außen am Gegenschwinger 20 fixierten Anker 41b differentiell auf das Meßrohr 10 und den Gegenschwinger 20 einwirkt. Diese Anordnung hat u.a. auch den Vorteil, daß einerseits der Gegenschwinger 20 und somit auch das Wandlergehäuse 100 im Querschnitt klein gehalten und trotzdem die Erregerspule 41a, insb. auch bei der Montage, leicht zugänglich ist. Darüber hinaus besteht ein weiterer Vorteil dieser Ausgestaltung der Erregeranordnung 40 auch darin, daß allfällig verwendete, insb. bei Nennweiten von über 50 mm nicht mehr vernachlässigbar schwere, Spulenbecher 41d ebenfalls am Gegenschwinger 20 fixierbar sind und somit praktisch keinen Einfluß auf die Resonanzfrequenzen des Meßrohrs 10 haben. Es sei jedoch an dieser Stelle darauf hingewiesen, daß falls erforderlich, die Erregerspule 41a auch vom Gegenschwinger 20 und dementsprechend der Anker 41b vom Meßrohr 10 gehaltert werden können.

In entsprechender Weise kann auch die Sensoranordnung 50 so ausgelegt und im Meßwandler angeordnet sein, daß durch sie die Vibrationen von Meßrohr 10 und Gegenschwinger 20 differentiell erfaßt werden. Im in der Fig. 5 gezeigten Ausführungsbeispiel umfaßt die Sensoranordnung 50 eine am Meßrohr 10 fixierte, hier außerhalb sämtlicher Trägheitshauptachsen der Sensoranordnung 50 angeordnete, Sensorspule 51a. Die Sensorspule 51a ist möglichst nah zu einem am Gegenschwinger 20 fixierten Anker 51b angeordnet und mit diesem magnetisch so gekoppelt, daß in der Sensorspule eine durch rotatorische und/oder laterale, ihre relative Lage und/oder ihren relativen Abstand verändernde Relativbewegungen zwischen Meßrohr 10 und Gegenschwinger 20 beeinflußte, veränderliche Meßspannung induziert wird. Aufgrund einer solchen Anordnung der Sensorspule 51a können in vorteilhafter Weise gleichzeitig sowohl die oben genannten Torsionsschwingungen als auch die ggf. angeregten Biegeschwingungen erfaßt werden. Falls erforderlich können die Sensorspule 51a dazu aber auch am Gegenschwinger 20 und in entsprechender Weise der mit dieser gekoppelte Anker 51 b am Meßrohr 10 fixiert sein.

Gemäß einer weiteren Ausgestaltung der Erfindung ist ferner vorgesehen, Schwingungserreger und Schwingungssensoren nach dem gleichen Wirkprinzip aufzubauen, insb. im wesentlichen einander baugleich auszubilden. Desweiteren ist auch möglich, Spule und/oder Anker von Erreger- und/oder Sensoranordnung unter Verzicht auf einen vermittelnden Hebel jeweils direkt am Meßrohr oder am Gegenschwinger zu befestigen.

Zum Anschließen der Erregeranordnung wie auch der Sensoranordnung an die erwähnte Betriebs- und Auswerte-Elektronik des In-Line-Meßgeräts sind des weiteren entsprechend Anschlußleitungen 60 vorgesehen, die zumindest abschnittsweise innerhalb des Wandlergehäuses verlegt sind und im Betrieb zumindest zeitweise elektrischen Strom führen. Die Anschlußleitungen können dabei zumindest anteilig als elektrische, zumindest abschnittsweise in von einer elektrischen Isolierung umhüllte Leitungsdrähte, insb. mit einem mittleren Querschnittsdurchmesser von kleiner als 2 mm (beispielsweise in einer Größenordnung zwischen 0.5 mm und 1.2) ausgebildet sein, z.B. inform von verdrillten Leitungen, sogenannten "Twisted-pair"-Kabeln, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein. Zudem können die Anschlußleitungen, beispielsweise im Falle der Verwendung optischer Schwingungssensoren, anteilig auch als betriebsgemäß zumindest zeitweise Licht führendes Lichtleiterkabel ausgebildet sein.

Gemäß einer Ausgestaltung der Erfindung ist ferner vorgesehen, die Anschlußleitungen 60 zumindest anteilig abschnittsweise entlang des Gegenschwingers zu verlegen und daran zumindest punktuell zu haltern. Gemäß einer Weiterbildung der Erfindung ist ferner vorgesehen, die entlang des Gegenschwingers verlegten und daran gehalterten Anschlußleitungen jeweils adhäsiv am Gegenschwinger zu fixieren. Die Anschlußleitungen können dabei in vorteilhafter Weise dadurch fixiert sein, daß sie in eine auf den Gegenschwinger aufgetragene elektrisch isolierende Schicht 70 aus adhäsivem, in ausreichendem Maße bruchfestem wie auch elastischem Material eingebettet sind. Diese Schicht 70 kann beispielsweise im wesentlichen durchgehend oder wie in Fig. 2 angedeutet abschnittsweise unterbrochen sein. Das Einbetten ermöglicht es zum einen, daß auf sehr einfache Weise eine stabile, dauerhafte Fixierung der Anschlußleitung 60 geschaffen werden kann. Zum anderen kann bei Verwendung eines elektrisch isolierenden Materials für die einbettende Schicht ein elektrisch vergleichsweise weniger festes Material für die Isolierung der Leitung gewählt oder sogar blanker Draht als Anschlußleitungen verwendet werden. Als die Anschlußleitungen fixierende Schicht 70 kann hier beispielsweise ein in entsprechender Weise aufgetragenes Glas- oder Glaslot, Keramik, Email oder eine Kunststoffmasse dienen. Als die Anschlußleitungen am Gegenschwinger fixierende Kunststoffmasse kommen z.B. Metallkleber, Harze oder auch Silikon in Frage. Zur Pufferung allfälliger thermisch bedingter Ausdehnung des Gegenschwingers kann es von Vorteil sein, die Anschlußleitungen in sich gekrümmt, insb. bogenförmig oder mäanderförmig, verlegt am Gegenschwinger 20 zu befestigen.

Wie auch aus der Zusammenschau von Fig. 2 und 3b ohne weiteres ersichtlich, sind die Anschlußleitungen im weiteren Verlauf zu einer im Wandlergehäuses vorgesehenen Durchführung D, beispielsweise aus Glas, Keramik und/oder einem Kunststoff, geführt von wo aus sie sich weiter zur erwähnten Betriebs- und Auswerteelektronik des In-Line-Meßgeräts erstrecken. Dabei ist ein Abschnitt jeder der Anschlußleitungen 60 jeweils zwischen zwei Abspannpunkten verläuft, von denen ein erster Abspannpunkt a1 auf dem die Anschlußleitung führenden Innenteil und ein zweiter Abspannpunkt am Wandlergehäuse a2 plaziert ist. Der zwischen den jeweils zugehörigen zwei Abspannpunkten verlaufende Abschnitt der Anschlußleitungen ist in vorteilhafter Weise im wesentlichen freischwingend verlegt, und zwar möglichst so, daß er im wesentlichen, insb. dauerhaft, frei von Zugspannungen gehalten ist. Je nach Lage der beiden Abspannpunkte kann es zudem erforderlich sein, die eine oder andere Anschlußleitung im weiteren Verlauf auch entlang der inneren Wandoberfläche des Wandlergehäuses 30 zu verlegen und zumindest punktuell daran zu fixieren.

Für den oben beschriebenen Fall, daß auch der Gegenschwinger im Betrieb zumindest zeitweise in erheblichem Maße Biegeschwingungen um eine Biegeschwingungsachse ausführt, ist ferner vorgesehen, die am Gegenschwinger 20 gehalterten Anschlußleitungen 60 zumindest anteilig, insb. überwiegend, entlang einer sich bei biegeschwingendem Gegenschwinger im wesentlichen nicht verzerrenden neutralen Faser des Gegenschwingers zu verlegen und entsprechend zu fxieren. Dies hat u.a. den Vorteil, daß die betroffenen Anschlußleitungen einerseits vergleichsweise wenig bewegt und somit auch mechanisch wenig belastet werden und anderseits selbst nur geringfügig auf das Innenteil mechanisch rückwirken. Zudem kann es zumindest bei Anschlußleitungen mit vergleichsweise starker Isolation und/oder bei mit großer Amplitude schwingendem Gegenschwinger von Vorteil sein, die Anschlußleitungen zumindest bezüglich einer der Trägheitshauptachsen $T1$, $T2$, $T3$ des mittels Meßrohr und Gegenschwinger gebildeten Innenteils im wesentlichen symmetrisch, insb. spiegelsymmetrisch bezüglich zumindest einer Trägheitshauptachse $T1$, $T2$, $T3$ des Gegenschwingers, zu verlegen, um somit einen gleichermaßen möglichst symmetrischen Dämpfungsbelag entlang des Innenteil zu erzielen bzw. Antisymmetrien im Dämpfungsbelag aufgrund von Dämpfungskräften in allfällig zumindest abschnittsweise bewegten Anschlußleitungen zu vermeiden. Symmetrieachse kann hierbei beispielsweise eine im wesentlichen senkrecht zu einer Längsachse $T1$ des Innenteils und insoweit auch des Meßrohrs und/oder des Gegenschwingers verlaufende Trägheitshauptachse $T2$, und/oder $T3$ des Innenteils sein.

Wie bereits mehrfach erwähnt, werden bei einer Anregung des Nutzmodes in dem in der oben beschriebenen Weise vibrierenden, einzigen Meßrohr 10 aufgrund von mit den Biegeschwingungen einhergehenden Massenbeschleunigungen bekanntlich Querkräfte $Q_1$ erzeugt; somit treten im Meßwandler in entsprechender Weise auch lateral ausgerichtete Querimpulse auf. Beispielsweise würde sich bei einer Schwingungsamplitude von ca. 0,03 mm für das oben erwähnte Edelstahl-Meßrohr eine Querkraft von etwa 100 N ergeben. Für den Fall, daß diese Querkräfte $Q_1$ nicht kompensiert werden können, führt dies dazu, daß das am Einlaßrohrstück 11 und am Auslaßrohrstück 12 aufgehängte Innenteil des Meßwandlers entsprechend lateral aus der zugewiesenen statischen Ruhelage verschoben wird. Damit einhergehend sind, wie in Fig. 6c und d schematisch dargestellt, auch die Kopplungszonen 11#, 12# bei vibrierendem Meßrohr zumindest zeitweise lateral aus einer statischen Ruhelage heraus bewegt.

Dementsprechend würden die Querkräfte $Q_1$ via Einlaß- und Auslaßrohrstück 11, 12 zumindest teilweise auch auf die angeschlossene Rohrleitung wirken und diese somit gleichfalls vibrieren lassen. Wie ferner erläutert, kann das Meßrohr 10 auch mittels des Gegenschwingers 20, praktisch nur für einen einzigen Mediumsdichtewert, bestenfalls aber für einen sehr schmalen Mediumsdichtebereich dynamisch ausbalanciert werden, vgl. Fig. 6b. Vielmehr aber wird das Meßrohr 10 und infolgedessen praktisch das gesamte Innenteil bei schwankender Mediumsdichte $r$ aus der Ruhelage, in den Fig. 6a bis d symbolisiert durch die Längsachse L, lateral verschoben werden, und zwar bei niedriger Dichte $r$ unterhalb des Mediumsdichtewertes, wie in der Fig. 6c schematisch dargestellt, in Richtung seiner eigenen Schwingungsbewegung oder bei hoher Dichte $r$ oberhalb des erwähnten Mediumsdichtewerts, wie in der Fig. 6d gezeigt, in Richtung der Schwingungsbewegung des Gegenschwingers 20. Insofern dient der Gegenschwinger 20 also eher dazu, den Meßwandler für genau einen vorherbestimmten, z.B. einen im Betrieb des Meßwandlers am häufigsten zu erwartenden oder auch kritischen Mediumsdichtewert, z.B. die Dichte von Wasser, soweit dynamisch auszubalancieren, daß die im vibrierenden Meßrohr erzeugten Querkräfte $Q_1$ möglichst vollständig kompensiert werden und letzteres dann seine statische Ruhelage praktisch nicht verläßt, vgl. Fig. 6a, 6b. Um ein möglichst einfach handhabbares Abstimmen des Gegenschwingers 20 auf den erwähnten Mediumsdichtewert und die dann tatsächlich angeregte Schwingungsform des Meßrohrs 10 zu ermöglichen, sind nach einer Ausgestaltung der Erfindung dem Gegenschwinger 20 diskrete Massenstücke 201, 202, insb. lösbar, aufgesetzt. Die Massenstücke 201, 202 können z.B. auf entsprechende, von außen am Meßrohr fixierte Stehbolzen aufgeschraubte Scheiben oder auf das Meßrohr 10 aufgeschobene kurze Rohrstücke sein. Ferner kann eine entsprechende Massenverteilung über dem Gegenschwinger 20 z.B. auch durch Ausformen von Längs- oder Ringnuten realisiert werden. Eine für die jeweilige Anwendung geeignete Masseverteilung kann in der dem Fachmann bekannten Weise vorab z.B. mittels Finite-Elemente-Berechnungen und/oder mittels experimenteller Messungen ohne weiteres ermittelt werden. Falls erforderlich, können selbstverständlich auch mehr als die gezeigten zwei Massenstücke 201, 202 verwendet werden.

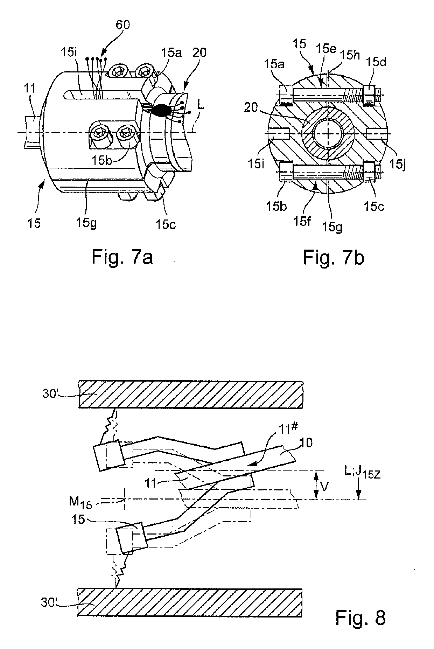

Zur weiteren verbesserten dynamischen Ausbalancierung des Meßwandlers, insb. auch bei Medien mit signifikant schwankender Dichte $r$, sind - auch mit Blick auf die in der US-B 66 91 583 oder der US-B 68 40 109 gezeigten Entkopplungsprinzipien für Biege- und/oder Torsionsschwingungen - der Ausleger 15 an Einlaßrohrstück 11, Gegenschwinger 20 und Meßrohr 10 sowie der Ausleger 16 an Auslaßrohrstück 12, Gegenschwinger 20 und Meßrohr 10 im wesentlichen starr gekoppelt. Dabei können die, insb. möglichst nah zum Meßrohr 10 hin angeordneten, Ausleger 15, 16 sowohl stoff- als auch form- und/oder kraftschlüssig mit der jeweils anderen Komponente des Innenteiles beispielsweise dem Gegenschwinger 20, verbunden sein. Dementsprechend können die Ausleger, z.B. angeschweißt, gelötet, aufgeklemmt und/oder aufgepreßt sein. Auf diese Weise werden mittels der Ausleger 15, 16 gleichermaßen exzentrisch, also nicht im zugehörigen Massenschwerpunkt $M_{15}$ bzw. $M_{16}$, an der jeweiligen Fixierstelle angreifende erste Massenträgheitsmomente, $J_{15x}$, $J_{16x}$, geschaffen, die kein Hauptträgheitsmoment des jeweiligen Auslegers 15, 16 sind. Beispielsweise kann jeder der Ausleger 15, 16 dafür zumindest anteilig unmittelbar am Gegenschwinger 20 fixiert sein. Für den vorgenannten Fall, daß die Ausleger 15, 16 jeweils auf Gegenschwinger 20 und/oder das zugehörige Verbindungsrohrstück aufgeklemmt werden sollen, können sie z.B. auch mittels entsprechender Schraubverbindungen fixiert werden. So ist in der Fig. 7a, b anhand des Auslegers 15 eine vorteilhafte Klemmverbindung für Ausleger der beschriebenen Art dargestellt. Der Ausleger ist hierbei mittels wenigstens zweier zueinander paralleler Durchgangsbolzen 15, 15b und entsprechender Muttern 15c, 15d nach dem Aufschieben auf den Gegenschwinger 20 fixiert worden, wobei die beiden Durchgangsbolzen 15a, 15b in auf einander gegenüberliegenden Seiten im Ausleger 15 angeordneten Durchgangsbohrungen 15e, 15f plaziert sind. Zum Verhindern eines ungewollten Wiederlösen der Muttern 15c, 15d können diese, falls erforderlich, nach der Montage zusätzlich mit dem jeweiligen Durchgangsbolzen in geeigneter Weise, z.B. mittels Metallkleber, adhäsiv und/oder, z.B. durch Schweißen und/oder Löten, stoffschlüssig verbunden werden. Um einen möglichst guten Kraftschluß zwischen Ausleger 15 und Gegenschwinger 20 bei akzeptablen Spannkräften in den Durchgangsbolzen 15a, 15b und im Gegenschwinger 20 zu gewährleisten, sind bei der hier gezeigten Variante zusätzlich mit der Längsachse L im wesentlichen fluchtende und zumindest auf der dem Gegenschwinger 20 und dem Meßrohr 20 zugewandten Frontpartie radial durchgängige Längsschlitze 15g, 15h eingearbeitet.

Bei lateralen Bewegungen der beiden Kopplungszonen 11#, 12#, beispielsweise infolge von dichteabhängigen Imbalancen zwischen Meßrohr 10 und Gegenschwinger 20 und/oder von extern in den Meßwandler eingekoppelten Störschwingungen, werden seitens des Auslegers 15 im Einlaßrohrstück 11 und seitens des Auslegers 16 im Auslaßrohrstück 12 jeweils Biegmomente erzeugt, die aufgrund der Exzentrizität und der Massenträgheit der Ausleger 15, 16 so ausgebildet sind, daß damit einhergehende Verformungen von Einlaß- und Auslaßrohrstück 11, 12 den lateralen Bewegungen der Kopplungszonen 11#, 12# entgegengerichtet sind. Anders gesagt, sind die Ausleger 15, 16 so geformt und bemessen, daß daraus resultierende erste Massenträgheitsmomente $J_{15x}$, $J_{16x}$ um eine quer zur Längsachse L verlaufende, jedoch von einer dazu parallelen Trägheitshauptachse des jeweiligen Auslegers beabstandeten imaginäre Drehachse $D_{15x}$, $D_{16x}$, zwar ein Verdrehen der Ausleger 15, 16 bei beschleunigter lateraler Verschiebung der Kopplungszonen 11#, 12#, erlauben, die jeweils zughörigen Massenschwerpunkte $M_{15}$, $M_{16}$ jedoch zumindest lateral im wesentlichen ortsfest in jener statischen Ruhelage verharren gelassen werden, die ihnen aufgrund der konkreten mechanisch-geometrischen Eigenschaften der Ausleger 15, 16 jeweils zugewiesenen sind. Insoweit bildet jeder der Massenschwerpunkte $M_{15}$, $M_{16}$ praktisch einen Drehpunkt für die die Biegemomente erzeugenden Drehbewegungen der Ausleger 15, 16. Im Ergebnis dessen führt also jeder der beiden Ausleger infolge des lateralen Bewegens der Kopplungszonen im Betrieb zumindest zeitweise Drehschwingungen um eine im wesentlichen quer zur Biegeschwingungsachse verlaufende, imaginäre Dreh- oder auch Drehschwingungsachse $D_{15x}$, $D_{16x}$ aus. Infolgedessen weist also jeder der beiden Ausleger wenigstens einen Ruhepunkt oder auch einen diese unmittelbar umgebenden Ruhebereich auf, der auch bei lateral bewegten Kopplungszonen 11#, 12# im wesentlichen ortsfest in einer zugehörigen statischen Ruhelage verharrt und/oder der zumindest einen relativen Abstand A zu einem sowohl vom Einlaßrohrstück als auch vom Auslaßrohrstück entfernten Bereich des Wandlergehäuses im wesentlichen beibehält.

Die in vorgenannter Weise exzentrisch an der jeweiligen Fixierstelle angreifenden Massenträgheitsmomente $J_{15x}$, $J_{16x}$, der Ausleger 15, 16 erzwingen somit - aufgrund beschleunigter lateraler Verschiebebewegungen V des Meßrohrs 10 um den jeweiligen, praktisch ortsfest ruhenden Massenschwerpunkt $M_{15}$ bzw. $M_{16}$ pendelnd - eine zusätzliche Verdrehung der jeweils zugehörigen Fixierstelle um die zu dieser lateralen Verschiebebewegung V sowie zur Längsachse L senkrechten imaginäre erste bzw. um die zur ersten im wesentlichen parallele imaginäre zweite Drehachse $D_{15x}$, $D_{16x}$, vgl. Fig. 6c und d. Diese, in Fig. 8 nochmals vergrößert dargestellte, Verdrehung praktisch der gesamten einlaßseitigen ersten Kopplungszone 11#, insb. des Einlaßendes, wiederum bewirkt zumindest abschnittsweise eine zusätzliche, zur Verschiebebewegung V des Meßrohrs 10 gegenläufige Verbiegung des Einlaßrohrstücks 11, die praktisch einer einachsigen, querkraftfreien und somit weitgehend schubspannungsfreien Biegung entspricht; in analoger Weise wird das Auslaßrohrstück 12 ebenfalls gegenläufig zur Verschiebebewegung V gebogen.

Die beiden Ausleger 15, 16 sind, wie auch in den Fig. 1 bis 4, dargestellt, einseitig, also lediglich im Bereich der Kopplungszonenen 11#, 12# fixiert. Zur Unterdrückung allfälliger unerwünschter Schwingungsmoden können ferner, wie in Fig. 8 schematisch dargestellt, jedoch zusätzliche der Stabilisierung der Massenschwerpunkte $M_{15}$, $M_{16}$ der Ausleger 15 bzw. 16 in ihrer jeweiligen Ruhelage dienende Feder - und/oder Dämpfungselemente vorgesehen sein, die, z.B. quer zur Hauptschwingungsebene oder, wie hier gezeigt, im wesentlichen in der Hauptschwingungsebene liegend jeweils an der Auslegermasse und am Wandlergehäuse 30 fixiert sind.

Die Dimensionierung des Innenteils, inkl. des Meßrohrs, des Gegenschwingers, des Ein- und Auslaßrohrstücks sowie der Ausleger, sowie die dadurch beeinflußten Verbiegungen von Ein- bzw. Auslaßrohrstück 11, 12 können, z.B. mittels computergestützter Simulationsberechnungen oder mittels experimenteller Messungen, dahingehend optimiert werden, daß durch die Verbiegung erzeugte Gegenkräfte $Q_2$ die oben erwähnten Querkräfte $Q_1$ im vibrierenden Meßrohr 10 über einen möglichst weiten Schwankungsbereich der Mediumsdichte vollständig oder zumindest weitgehend kompensiert werden, und zwar so, daß außen am Wandlergehäuse 30 und somit auch an der angeschlossenen Rohrleitung praktisch keine durch das vibrierende Meßrohr 10, ggf. auch das gesamte oszillierende Innenteil verursachten Querkräfte auftreten. Allfällige Verformungen der angeschlossenen Rohrleitung aufgrund der so erzeugten Biegemomente können beispielsweise durch eine entsprechend hohe Biegesteifigkeit des Wandlergehäuses 30 ohne weiteres unterdrückt werden.

Gemäß einer anderen Ausgestaltung der Erfindung ist vorgesehen, daß das Meßrohr 10, angetrieben von der Erregeranordnung, im Betrieb in überwiegendem Maße und/oder zumindest zeitweise mit einer Schwingungsfrequenz, $f_{exc}$, vibrieren gelassen, die mindestens einem 1,5-fachen einer niedrigste natürliche Eigenfrequenz eines schwingfähigen Innenteils des Meßwandlers entspricht, das - wie bereits ausgeführt - zumindest mittels des Meßrohrs 10 selbst, des Gegenschwingers 20, des Einlaßrohrstücks 11, des Auslaßrohrstücks 12 sowie der beiden Ausleger 15, 16 gebildet ist. Anders gesagt, soll die natürliche Resonanzfrequenz des Nutzmodes wenigstens 1,5-fachen, möglichst aber mehr als einem 2-fachen der niedrigsten natürlichen Eigenfrequenz des Innenteils entsprechen. Bei den hier vorgestellten Abmessungen des Innenteils würde dessen niedrigste natürliche Eigenfrequenz bei leerem Meßrohr beispielsweise etwa 250 Hz oder weniger betragen, während sie bei mit Wasser gefülltem Meßrohr etwa in der Größenordnung von 200 Hz oder darunter liegen würde.

Weiterführende Untersuchungen haben nunmehr gezeigt, daß diese vorgenannte Forderung dadurch wirkungsvoll, insb. auch unter Beibehaltung des in der US-B 66 91 583 oder der US-B 68 40 109 gezeigten Entkopplungsprinzips, realisiert und somit, insb. gegenüber den in der US-B 66 91 583 oder der US-B 68 40 109 gezeigten Meßwandlern, erhebliche Verbesserungen hinsichtlich der Störfestigkeit und insoweit auch der Meßgenauigkeit von In-Line-Meßgeräten der beschriebenen Art erzielt werden können, daß jeder der beiden Ausleger 15, 16 so ausgelegt ist, daß er eine im Vergleich zur Masse, $m_{10}$, des Meßrohrs 10 erheblich größere Masse, $m_{15}$, $m_{16}$, aufweist, und zwar mindestens in der Größenordnung der Masse, $m_{20}$, des Gegenschwingers 20. Daher ist beim erfindungsgemäßen Meßwandler gemäß einer Ausgestaltung ferner vorgesehen, daß der Gegenschwinger 20 und die Ausleger 15, 16 so dimensioniert sind, daß die Masse, $m_{15}$ bzw. $m_{16}$, eines jeden der beiden Ausleger 15, 16 mindestens gleich einer Masse, $m_{20}$, des Gegenschwingers 20 ist. Gemäß einer weiteren Ausgestaltung der Erfindung ist weist jeder der beiden Ausleger 15, 16 eine Masse, $m_{15}$, $m_{16}$, auf, die größer ist als ein 1,5-faches der Masse, $m_{20}$, des Gegenschwingers 20. Je nach Nennweite des verwendeten Meßrohrs kann somit die Masse, $m_{15}$, $m_{16}$, eines jeden der beiden Ausleger 15, 16 ohne weiteres größer als ein 10-faches der Masse, $m_{10}$, des Meßrohrs 10 sein. Ferner konnte hierbei festgestellt werden, daß sich gute Ergebnisse hinsichtlich der Störfestigkeit erzielen lassen, wenn jeder der beiden Ausleger 15, 16 eine Masse, $m_{15}$, $m_{16}$, aufweist, die kleiner ist als ein 5-faches der Masse, $m_{20}$, des Gegenschwingers 20 oder die, zumindest für Meßrohre großer Nennweiten oberhalb von 50 mm, höchsten sogar nur einem 3-fachen der Masse, $m_{20}$, des Gegenschwingers 20 entspricht.

Gemäß einer weiteren Ausgestaltung der Erfindung ist jeder der Ausleger 15, 16 so bemessen, daß eine jeweilige Masse, $m_{15}$, $m_{16}$, mehr als 5 kg, insb. mehr als 10 kg, beträgt, insb. aber kleiner als 50 kg ist.

Um eine ausreichend große Masse, $m_{15}$, $m_{16}$, bereitzustellen, ist jeder der Ausleger 15, 16 nach einer weiteren Ausgestaltung der Erfindung so ausgebildet daß er zumindest eine größte Wandstärke aufweist, die größer als eine größte Wandstärke des Gegenschwingers 20 ist. Ferner ist im vorgestellten Ausführungsbeispiel jeder der Ausleger 15, 16 aber auch so dimensioniert, daß er eine kleinste seiner Wandstärken größer als die größte Wandstärke des Gegenschwingers 20 ist, wodurch nicht nur eine entsprechend hohe Masse, $m_{15}$, $m_{16}$ sondern auch eine im Vergleich zu Meßrohr 10 und Gegenschwinger 20 entsprechend hohe Biegesteifigkeit für jeden der Ausleger 15, 16 erzielt werden kann.

Gemäß einer weiteren Ausgestaltung der Erfindung sind zumindest das Meßrohr 10 und die Ausleger 15, 16 aufeinander abgestimmt so bemessen, daß das mit Wasser befüllte Meßrohr 10 eine niedrigste natürliche Eigenfrequenz, $f_{10,H2O}$ aufweist, für die zumindest gilt:

$$f_{10} \geq \frac{1}{2\pi} \cdot \sqrt{\frac{12 \cdot E_{11} \cdot I_{11} / L_{11}^3}{m_{15}}} \ ,$$

worin $E_{11}$ das Elastizitätsmodul vom Material des Einlaßrohrstücks 11 repräsentiert und $I_{11}$ eine für die Schwingungen des oben bezeichneten Innenteils wirksames oder mittleres axiales Flächenträgheitsmoment des Einlaßrohrstücks 11 ist. Dieses Flächenträgheitsmoment ergibt sich in bekannter Weise gemäß der Beziehung:

$$I_{11} = \frac{\pi}{64} \left[ (DN + d)^4 - d^4 \right]$$

Dabei entspricht der Ausdruck $E_{11} \cdot I_{11} / L_{11}^3$ praktisch der durch das Einlaßrohrstück 11 bestimmten, für die Schwingungen des Innenteils letzlich maßgebenden Federkonstanten, die zumindest für einen im wesentlichen symmetrischen Aufbau des Innenteils praktisch auch gleich ist der in analoger Weise bestimmten Federkonstante des Auslaßrohrstsücks 12. Insoweit gilt bei im wesentlichen symmetrischem Aufbau gleichermaßen

$$\sqrt{\frac{E_{11} \cdot I_{11} / L_{11}^3}{m_{15}}} = \sqrt{\frac{E_{12} \cdot I_{12} / L_{12}^3}{m_{16}}}$$

Gemäß einer weiteren Ausgestaltung ist vorgesehen, daß für die Schwingungsfrequenz, $f_{exc}$, im Betrieb mit der das Meßrohr 10 zumindest zeitweise in überwiegendem Maße vibriert, gilt:

$$f_{exc} > \frac{1}{2\pi} \cdot \sqrt{\frac{12 \cdot E_{11} \cdot I_{11}/L_{11}^3}{m_{15}}}$$

Dadurch sind also das Ein- und das Auslaßrohrstück sowie die Massen, $m_{15}$, $m_{16}$ der Ausleger 15, 16 so aufeinander abgestimmt, daß bereits durch sie eine niedrigste natürliche Eigenfrequenz des Innenteils unterhalb der im Betrieb zu erwartenden von der Dichte des zu messenden Mediums abhängigen Schwingfrequenz, $f_{exc}$, des Meßrohrs 10 definiert ist.

Um dies sowie ein trotzdem möglichst verzögerungsfreies Verdrehen der Ausleger 15, 16 und insoweit eine hohe Bandbreite des Entkopplungsmechanismus zu erreichen sind die Ausleger 15 bzw. 16 ferner so geformt und am Meßrohr 10 fixiert, daß ein Quotient der vorgenannten ersten Massenträgheitsmoment, $J_{15x}$, $J_{16x}$, durch die jeweils zugehörige Auslegermasse $m_{15}$ oder $m_{16}$ möglichst klein. Experimentelle Untersuchungen haben hierbei ferner gezeigt, daß sich, insb. auch bei Verwendung von vergleichsweise schweren und insoweit eher trägen Auslegern 15, 16 von beispielsweise jeweils mehr als 10 kg, eine vergleichsweise hohe Störfestigkeit des Meßwandlers bei gleichbleibend hoher Dynamik erzielen läßt, wenn der Quotient $J_{15x}/m_{15}$, $J_{16x}/m_{16}$, des jeweiligen Massenträgheitsmoments, $J_{15x}$, $J_{16x}$, eines jeden Auslegers 15, 16 zu dessen jeweiliger Masse, $m_{15}$, $m_{16}$, kleiner gehalten ist als 0,03 $m^2$, insb. in einem Bereich zwischen 0,001 $m^2$ und 0,01 $m^2$ liegt. Weiterführend konnte durch Untersuchung des Schwingungsverhaltens von Meßwandlern der beschriebenen Art verschiedener Nennweiten festgestellt werden, daß sich bezüglich Störfestigkeit und Dynamik gute Ergebnisse erzielen lassen, wenn ein Verhältnis des vorgenannten Quotienten $J_{15x}/m_{15}$, des Auslegers 15 wie auch ein Verhältnis des Quotienten $J1_{6x}/m_{16}$, des zweiten Auslegers 16 zu einer Querschnittsfläche des Meßrohrs $A_{10}$ (gemeint ist der Flächeninhalt) möglichst klein, insb. kleiner als 10, gehalten ist. In Anbetracht dessen ist gemäß einer weiteren Ausgestaltung der Erfindung vorgesehen, die Ausleger 15, 16 in Abhängigkeit von der für den tatsächlichen Meßwandler gewählten Nennweite DN des Meßrohrs jeweils so auszuführen und zu dimensionieren, daß durch den Ausleger 15 zumindest die Bedingung $0,5 < \dfrac{J_{15x}}{m_{15} \cdot A_{10}} < 5$ und durch den Ausleger 16 zumindest die Bedingung $0,5 < \dfrac{J_{16x}}{m_{16} \cdot A_{10}} < 5$ erfüllt sind.

Gemäß einer weiteren Ausgestaltung der Erfindung sind die Ausleger 15, 16 ferner so ausgebildete, daß jedes der beiden ersten Massenträgheitsmomente, $J_{15x}$, $J_{16}$, mindestens 0,01 kg, $m^2$ beträgt.

Für den oben erwähnten Fall, daß der Meßwandler in einem Dualmode betrieben werden soll, bei dem das Meßrohr 10 sowohl zumindest zeitweise Biegeschwingungen als auch zumindest zeitweise Torsionsschwingungen ausführt, sind neben dem jeweiligen Massenträgheitsmoment, $J_{15x}$, $J_{16x}$, eines jeden Auslegers 15, 16 um die zugehörige Drehachse, $D_{15x}$, $D_{16x}$, durchaus auch jene zweiten Massenträgheitsmomente, $J_{15z}$, $J_{16z}$, der Ausleger 15, 16 von Interesse, die beschleunigten Verdrehungen derselben um eine jeweils zur Längsachse L im wesentlichen parallele imaginäre Drehachse, $D_{15z}$, $D_{16z}$, entgegenwirken. Für den im Ausführungsbeispiel gezeigten Meßwandler, bei dem die Ausleger sowohl mit Ein- und Auslaßrohrstück als auch mit Meßrohr und Gegenschwinger fluchten, entsprechen die Massenträgheitsmomente, $J_{15z}$, $J_{16z}$, im wesentlichen einem der drei Hauptträgheitsmomente des jeweiligen Auslegers 15, 16 und die Drehachse, $D_{15z}$, $D_{16z}$, im wesentlichen den jeweils zugehörigen Trägheitshauptachsen. Gemäß einer weiteren Ausgestaltung der Erfindung sind die die Ausleger 15, 16 daher so dimensioniert, daß ein Verhältnis, $J_{15x}/J_{15z}$, $J_{16x}/J_{15z}$, des jeweils ersten Massenträgheitsmoments, $J_{15x}$, $J_{16}$, eines jeden Auslegers 15, 16 zu dessen jeweiligen zweiten Massenträgheitsmoment, $J_{15z}$, $J_{16z}$, kleiner als 5, insb. kleiner als 2 ist. Zumindest für den oben beschriebenen Fall, daß jedes der beiden ersten Massenträgheitsmomente, $J_{15x}$, $J_{16x}$, mindestens 0,01 kg,· $m^2$ beträgt, sollte also auch jedes der beiden zweiten Massenträgheitsmomente, $J_{15z}$, $J_{16z}$, mindestens etwa 0,01 kg· $m^2$ betragen.

Die Ausleger 15, 16 sind gemäß einer weiteren Ausgestaltung der Erfindung ferner so ausgestaltet, daß sie eine niedrigste Biegesteifigkeit um die jeweilige Drehachse $D_{15x}$, $D_{16x}$, aufweisen, die größer ist als eine vergleichbare Biegesteifigkeit $E_{11} \cdot I_{11}$ des Einlaßrohrstücks 11 und eine entsprechende Biegesteifigkeit $E_{12} \cdot I_{12}$ des Auslaßrohrstücks 12 bezüglich derselben Drehachse $D_{15x}$ bzw. $D_{16x}$. Für den oben erwähnten Fall, daß auch die entsprechende Länge $L_{15}$, $L_{16}$ des jeweiligen Auslegers 15, 16 deutlich kleiner gewählt ist, als die entsprechende Länge, $L_{11}$, des Einlaßrohrstücks 11 und die entsprechende Länge, $L_{12}$, des Auslaßrohrstücks 12, kann so auch ohne weiteres sichergestellt werden, daß die entsprechende Federkonstante jedes der Ausleger 15, 16 stets größer ist als die oben erwähnte, zu $E_{11} \cdot I_{11}/L^3 11$ proportionale Federkonstante des Einlaßrohrstücks 11 und die entsprechende Federkonstante (~ $E_{12} \cdot I_{12}/L^3 12$) des Auslaßrohrstücks 12.

Zur optimalen Anpassung der erforderlichen Massen, Massenträgheitsmomente und/oder Biegesteifigkeiten der Ausleger 15, 16 an die, insb. durch Meßrohr 10 und/oder Gegenschwinger 20, tatsächlich vorgegebene Werte können, zusätzlich oder alternativ zur oben erwähnten Ringnut, ferner auch, wie in den Fig. 7a und 7b anhand des Auslegers 15 angedeutet, mit der Längsachse L im wesentlichen fluchtende Längsnuten 15i, 15 j im jeweiligen Ausleger vorgesehen sein. Dabei zeichnet sich der erfindungsgemäße Meßwandler, wie sich aus den vorangegangenen Erläuterungen unschwer erkennen läßt, durch eine Vielzahl von Einstellmöglichkeiten aus, die es dem Fachmann, insb. auch noch nach einer Spezifikation von äußeren oder inneren Einbaumaßen, ermöglichen, eine Kompensation von im Meßrohr 10 und ggf. im Gegenschwinger 20 betriebsbedingt erzeugten Querkräften mit einer hohen Güte zu erzielen. Die vorgenannten Parameter, insb. die Massen, $m_{15}$, $m_{16}$, die ersten und zweiten Trägheitsmomente $J_{15x}$, $J_{16x}$, $J_{15x}$, $J_{16x}$, wie auch die davon abgeleiteten Verhältnisse können dabei ohne weiteres in weiten Grenzen an die durch die für das Meßrohr 10 tatsächlich vorgesehene Nennweite DN wie auch die für den Meßwandler vorgesehene Einbaulänge entsprechend angepaßt werden.

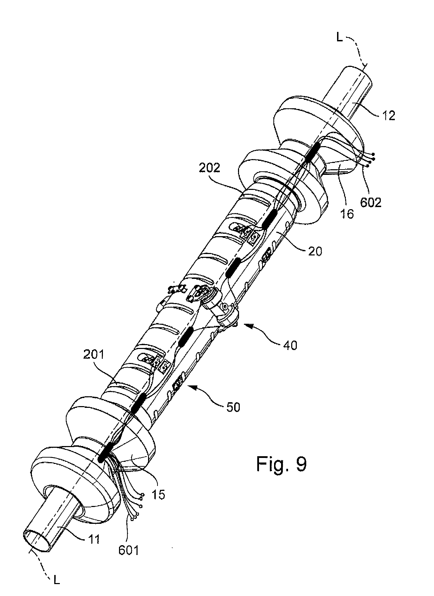

Zur weiteren Verbesserung der Schwingungseigenschaften des Meßwandlers und damit einhergehend zur weiteren Verbesserung der Meßgenauigkeit ist gemäß einer weiteren Ausgestaltung der Erfindung ferner vorgesehen, daß zumindest eine Anschlußleitung 601 der im Betrieb zumindest zeitweise Strom führenden, gegebenenfalls auch am Gegenschwinger in geeigneter Weise fixierten Anschlußleitungen 60, wie auch in Fig. 2 schematisch dargestellt, an wenigstens einem der beiden Ausleger 15, 16 gehaltert ist. Dies kann beispielsweise eine Anschlußleitung von einem Leitungspaar sein, das für die Erregeranordnung vorgesehen ist, und/oder eine Anschlußleitung von einem Leitungspaar, das für die Sensoranordnung vorgesehen ist. Ferner ist es möglich auch beide Anschlußleitungen eines solchen Leitungspaares an ein und demselben Ausleger zu haltern. Es kann aber durchaus auch von Vorteil sein - sowohl im Hinblick auf eine allfällige Induktion von Störspannungen in betriebsmäßig stromführende Anschlußleitungen als auch im Hinblick auf allfällige mechanische Dämpfungswirkungen der Anschlußleitungen auf das Innenteil -, wie in Fig. 9 dargestellt, eine erste Anschlußleitung 601 eines solchen Leitungspaares am ersten Ausleger 15 und eine zweite Anschlußleitung 602 desselben Leitungspaares am zweiten Ausleger 16 entsprechend zu haltern. Die Fixierung der Anschlußleitungen 601, 602 am jeweiligen Ausleger kann beispielsweise wiederum zumindest anteilig, insb. überwiegend, adhäsiv erfolgen. Wie bereit erwähnt, können die Anschlußleitungen 60 zumindest anteilig auch paarweise zusammengefaßt sein, beispielsweise auch als "Twisted-pair"- oder auch als Koaxial-Kabel. Daher sind gemäß einer weiteren Ausgestaltung der Erfindung zumindest zwei der Anschlußleitungen zu einem Leitungspaar zusammengefaßt, und ist das wenigstens eine Leitungspaar am Innteil, insb. zumindest einem der Ausleger 15, 16, entsprechend gehaltert. Dies kann beispielsweise derart erfolgen das einige der Anschlußleitungen zumindest abschnittsweise unmittelbar am Ausleger fixiert sind, während daran wiederum weitere Anschlußleitungen gehaltert sind, beispielsweise auch mittels Kabelbinder. Gleichwohl kann aber auch eine jede der allfällig am Ausleger gehalterten Anschlußleitungen jeweils für sich zumindest abschnittsweise am Ausleger adhäsiv befestigt werden.

Die Anschlußleitungen sind gemäß einer weiteren Ausgestaltung der Erfindung dabei in der Weise am Innenteil geführt, daß entlang des Gegenschwingers verlegte und gegebenenfalls zumindest punktuell daran fixierte Leitungsabschnitte 610" mit entlang des Auslegers verlegten und daran ebenfalls fixierten Leitungsabschnitten 601''' im wesentlichen fluchten. Für den oben beschriebenen Fall, daß Meßrohr 10 und Gegenschwinger 20 zumindest zeitweise einander koplanare Biegeschwingungen in einer gemeinsamen- hier der von den Trägheitshauptachsen T1, T2 imaginär aufgespannten - Schwingungsebene ausführen ist, gemäß einer weiteren Ausgestaltung der Erfindung ferner vorgesehen, daß die wenigstens eine am Ausleger gehalterte Anschlußleitung 601 zumindest anteilig außerhalb der gemeinsamen Schwingungsebene von Meßrohr und Gegenschwinger am Ausleger fixiert ist, insb. entlang einer mit oben erwähnten neutralen Faser des biegeschwingenden Gegenschwingers fluchtenden Linie.

Gemäß einer weiteren Ausgestaltung der Erfindung ferner vorgesehen, daß der erste Abspannpunkt a1 auf dem die Anschlußleitung halternden Ausleger und der zweite Abspannpunkt a2 vis-a-vis am Wandlergehäuse angeordnet ist. Ferner ist vorgesehen, daß der zwischen den beiden Abspannpunkten a1, a2 verlaufende Abschnitt 601' der wenigstens einen am Ausleger gehalterten Anschlußleitung im wesentlichen frei von Zugspannungen gehalten ist; dies im besonderen dauerhaft auch bei betriebsgemäß schwingendem Innenteil und bei allfällig auftretenden Temperaturschwankungen. Falls erforderlich, kann die so verlegte Anschlußleitung im weiteren Verlauf zudem jeweils auch entlang einer inneren Wandoberfläche des Wandlergehäuses 30 verlegt und zumindest punktuell daran fixiert sein.

Bei der in Fig. 2 gezeigten Variante ist der erfindungsgemäße Meßwandler ferner in der Weise ausgebildet, daß sämtliche der im Betrieb zumindest zeitweise Strom führenden Anschlußleitungen zumindest abschnittsweise am selben Ausleger gehalten sind. Dies hat u.a. den Vorteil, daß die Anschlußleitungen sukzessive zu einem gemeinsamen Leitungsbündel zusammengefaßt und im weiteren Verlauf mit vergleichsweise wenig Aufwand geführt und gegebenenfalls auch zusätzlich fixiert werden können. Alternativ oder in Ergänzung dazu kann der erfindungsgemäße Meßwandler ferner so ausgebildet sein, daß an einem der beiden Ausleger keine der im Betrieb zumindest zeitweise elektrischen Strom führenden Anschlußleitungen gehaltert ist. Dies im besonderen auch dann, wenn, wie auch in Fig. 2 dargestellt, an dem anderen der beiden Ausleger sämtliche der im Betrieb zumindest zeitweise elektrischen Strom führenden Anschlußleitungen gehaltert sind. Alternativ dazu ist es aber auch möglich, die Anschlußleitungen anteilig an dem ersten Ausleger und anteilig am zweiten Ausleger entsprechend zu fixieren, so daß also an jedem der beiden Ausleger zumindest eine der Anschlußleitungen gehaltert ist. Daher ist gemäß einer weiteren - in Fig. 9 schematisch dargestellten - Variante der Erfindung vorgesehen, am ersten Ausleger 15 zumindest eine erste Anschlußleitung 601 und am zweiten Ausleger 16 zumindest eine zweite Anschlußleitung 602 zu haltern. Gemäß einer Ausgestaltung dieser Variante der Erfindung ist ferner vorgesehen, daß die beiden Anschlußleitungen 601, 602 zumindest entlang des jeweils halternden Auslegers in gleicher Weise verlegt und/oder zumindest am jeweils halternden Ausleger in gleicher Weise fixiert sind. In einer weiteren Ausgestaltung der Erfindung ist ferner vorgesehen, daß diese beiden Anschlußleitungen 601, 602 zueinander im wesentlichen symmetrisch verlegt sind.

Wie bereits erwähnt, verläuft zumindest ein im wesentlichen freischwingender Abschnitt jeder Anschlußleitungen zwischen zwei Abspannpunkten a1, a2, von denen der erste (a1) auf dem die Anschlußleitung führenden Innenteil und der zweite (a2) entsprechend am Wandlergehäuse 30 plaziert ist. Zur Verringerung seitens der Anschlußleitungen in das Innenteil im Betrieb allfällig eingekoppelter Dämpfungskräfte ist gemäß einer Ausgestaltung der Erfindung ferner vorgesehen, daß die beiden Abspannpunkte a1, a2 so angeordnet sind, daß ein relativer Abstand A' dazwischen auch bei im obigen Sinne biegeschwingendem Meßrohr 10 im wesentlichen unverändert bleibt oder allenfalls nur unwesentlich verändert wird. Dies kann beispielsweise im Bereich der Kopplungszonen 11# und 12#, insb. aber auf den Auslegern 15, 16, in hinreichendem Maße gegeben sein.

Im Hinblick darauf, daß das in der vorbeschriebenen Weise mittels des Meßrohrs, des Gegenschwingers, der beiden Ausleger sowie des Einlaß und des Auslaßrohrstücks gebildete Innenteil derart dimensioniert werden kann, daß im Betrieb jeder der beiden Ausleger wenigstens einen Ruhepunkt aufweist, der auch bei lateral bewegter zugehöriger Kopplungszone zumindest lateral im wesentlichen ortsfest in einer zugehörigen statischen Ruhelage verharrt, eignen sich solche Ruhepunkte oder diese unmittelbar umgebende Ruhebereich des Auslegers zur Fixierung von Anschlußleitungen im als Position für den ersten Abspannpunkt. Einerseits kann so erreicht werden, daß die jeweilige Anschlußleitung zum einen selbst keinen oder nur sehr geringen mechanischen Belastungen aufgrund von Vibrationen des Innenteils ausgesetzt ist und zum anderen zumindest in diesem Bereich keine nennenswert auf das Innenteil rückwirkenden Dämpfungskräfte erzeugt. Zur Reduzierung allfällig von den Anschlußleitungen verursachten, auf das vibrierenden Innenteil, insb. bezüglich des erwähnten Coriolis-Modes asymmetrisch, rückwirkender Dämpfungskräfte ist daher gemäß einer Weiterbildung der Erfindung vorgesehen, die wenigstens eine am Ausleger gehaltene Anschlußleitung zumindest anteilig an dessen wenigstens einem Ruhpunkt oder zumindest innerhalb eines diesen unmittelbar umgebenden wenigstens Ruhebereich gehaltert ist. Von besonderem Vorteil ist es dabei, den ersten Abspannpunkt so am Ausleger zu plazieren, daß er mit dem wenigstens einen Ruhepunkt im wesentlichen koinzidiert. Zur Minimierung der Länge des freischwingenden Abschnitts der so gehalterten Anschlußleitung ist gemäß einer Weiterbildung der Erfindung der zweite Abspannpunkt für diese Anschlußleitung vis-a-vis des ersten Abspannpunktes am Wandlergehäuse angeordnet.

Wie bereits erwähnt, kann der Meßwandler neben den für das Erfassen von Vibrationen des Meßrohrs vorgesehenen Schwingungssensoren, wie beispielsweise auch in der EP-A 831 306, der US-B 70 40 179, der US-A 57 36 653, der US-A 53 81 697 oder der WO-A 01/02 816 vorgeschlagen, noch weitere, insb. dem Erfassen eher sekundärer Meßgrößen, wie z.B. Temperatur, Beschleunigung, Dehnung, Spannung etc., dienende am Innenteil angeordnete Sensoren 80 aufweisen. Die dafür entsprechend vorgesehenen Anschlußleitungen können dann in gleicher Weise geführt sein wie, die Anschlußleitungen für die Sensor- und/oder die Erregeranordnung, gegebenenfalls mit diesen zu einem Leitungsbündel zusammengefaßt. Demgemäß ist in einer weiteren Ausgestaltung der Erfindung des weiteren vorgesehen, daß der Meßwandler wenigsten einen am Gegenschwinger fixierten Temperatursensor und/oder wenigsten einen am Gegenschwinger fixierten Dehnungssensor sowie Anschlußleitungen 603 dafür aufweist. Im besonderen ist ferner vorgesehen, daß von den Anschlußleitungen für den Temperatursensor und/oder den Dehnungssensor zumindest eine, insb. auch sämtliche, zumindest anteilig an wenigstens einem der beiden Ausleger gehaltert ist; insb. in gleicher Weise wie die Anschlußleitungen für die Erreger- und/oder die Sensoranordnung.

Der erfindungsgemäße Meßwandler zeichnet sich durch eine in erheblichem Maße reduzierte Asymmetrie in dem entlang des schwingenden Innenteils auftretend Dämpfungskraftbelag aus und ist dabei sowohl für Meßrohre mit eher kleineren Nennweiten DN, insb. im Bereich von kleiner als 10 mm, als auch im besonderen für die Einsatz in Rohrleitung mit einem Kalibier von mehr als 50 mm und damit einhergehend auch für Meßrohre mit Nennweiten von wesentlich größer als 40 mm geeignet. Für den Fachmann besteht im übrigen nunmehr auch keine Schwierigkeit mehr darin, die exemplarisch gezeigten Varianten hinsichtlich der Führung und/oder Fixierung der Anschlußleitungen bei der Fertigung solcher Meßwandler entsprechend den tatsächlichen Gegebenheiten gegebenenfalls auch durch eine etwas veränderte Leitungsführung im Sinne der Lehre der Erfindung geeignet abzuwandeln.

## Patentansprüche

1.  Meßwandler vom Vibrationstyp für ein in einer Rohrleitung strömendes Medium, welcher Meßwandler umfaßt:

    - ein, insb. im wesentlichen gerades, im Betrieb zumindest zeitweise vibrierendes Meßrohr (10) zum Führen des Mediums, wobei das Meßrohr (10) über ein einlaßseitig einmündendes, insb. im wesentlichen gerades, Einlaßrohrstück (11) und über ein auslaßseitig einmündendes, insb. im wesentlichen gerades, Auslaßrohrstück (12) mit der Rohrleitung kommuniziert,

- einen, insb. im wesentlichen rohrförmigen und/oder im wesentlichen geraden, Gegenschwinger (20), der unter Bildung einer ersten Kopplungszone (11#) einlaßseitig am Meßrohr fixiert ist und der unter Bildung einer zweiten Kopplungszone (12#) auslaßseitig am Meßrohr (10) fixiert ist,

- einen mit dem Meßrohr (10) einlaßseitig gekoppelten ersten Ausleger (15),

- einen mit dem Meßrohr (10) auslaßseitig gekoppelt zweiten Ausleger (16),

- eine zumindest anteilig am Gegenschwinger (20) gehalterte Sensoranordnung (50) zum Erfassen von Schwingungen zumindest des Meßrohrs (10),

- eine zumindest anteilig am Gegenschwinger (20) gehalterte Erregeranordnung (40) zum Antreiben zumindest des Meßrohrs (10),

- ein am Einlaßrohrstück (11) und am Auslaßrohrstück (12) fixiertes Wandlergehäuse (30), sowie

- Anschlußleitungen, insb. für die Erregeranordnung und/oder für die Sensoranordnung, von welchen Anschlußleitungen wenigstens eine zumindest punktuell an einem mittels Meßrohr, Gegenschwinger und den beiden Auslegern gebildeten Innenteil des Meßwandlers und zumindest punktuell am Wandlergehäuse gehaltert ist,

- wobei sowohl das Meßrohr als auch der Gegenschwinger im Betrieb zumindest zeitweise Biegeschwingungen um eine gedachte Biegeschwingungsachse ausführen, die die beiden Kopplungszonen (11#, 12#) imaginär miteinander verbindet,

- wobei ein Abschnitt zumindest der einen an Innenteil und Wandlergehäuse gehalterten Anschlußleitung zwischen zwei voneinander beabstandeten, selbige Anschlußleitung punktuell fixierende Abspannpunkten freischwingend verläuft, von denen ein erster Abspannpunkt auf dem Innenteil des Meßwandlers und ein zweiter Abspannpunkt am Wandlergehäuse angeordnet ist,

- wobei die beiden Abspannpunkte so angeordnet sind, daß ein relativer Abstand dazwischen auch bei vibrierendem Meßrohr im wesentlichen unverändert bleibt, und

- wobei zumindest die wenigstens eine an den Abspannpunkten gehalterte Anschlußleitung im weiteren Verlauf auch entlang zumindest eines Abschnitts des Gegenschwingers (20) verlegt und zumindest punktuell daran fixiert ist, derart, daß die wenigstens eine zwischen den zwei Abspannpunkten gehaltene Anschlußleitung zumindest anteilig, insb. überwiegend, entlang einer sich bei biegeschwingendem Gegenschwinger im wesentlichen nicht verzerrenden neutralen Faser des Gegenschwingers an selbigem fixiert ist.

2. Meßwandler nach dem vorherigen Anspruch,

   - wobei der zwischen den beiden Abspannpunkten verlaufende Abschnitt der wenigstens einen Anschlußleitung im wesentlichen freischwingend verlegt ist; und/oder

   - wobei der zwischen den beiden Abspannpunkten verlaufende Abschnitt der wenigstens Anschlußleitung im wesentlichen, insb. dauerhaft, frei von Zugspannungen gehalten ist; und/oder

   - wobei zumindest die wenigstens eine an den zwei Abspannpunkten gehaltene Anschlußleitung im weiteren Verlauf auch entlang einer inneren Wandoberfläche des Wandlergehäuses verlegt und zumindest punktuell daran fixiert ist; und/oder

   - wobei zumindest die wenigstens eine zwischen den zwei Abspannpunkten gehaltene Anschlußleitung im Betrieb zumindest zeitweise elektrischen Strom führt; und/oder

   - wobei sämtliche Anschlußleitungen am selben Ausleger gehaltert sind; und/oder

   - wobei an einem der beiden Ausleger sämtliche der Anschlußleitungen gehaltert sind; und/oder

   - wobei der Meßrohr und Gegenschwinger im Betrieb zumindest zeitweise und/oder anteilig in einem Nutzmode lateral oszillieren, in dem sie im wesentlichen koplanare Biegeschwingungen in einer gemeinsamen gedachten Schwingungsebene ausführen, und wobei die wenigstens eine an den zwei Abspannpunkten gehalterte Anschlußleistung zumindest anteilig außerhalb der gemeinsamen Schwingungsebene von Meßrohr und Gegenschwinger am Gegenschwinger fixiert ist.

3. Meßwandler nach einem der vorherigen Ansprüche,

   - wobei Meßrohr (10) und Gegenschwinger im wesentlichen gerade und zueinander im wesentlichen koaxial ausgerichtet sind; und/oder

   - wobei das Meßrohr (10) zumindest teilweise vom Gegenschwinger (20) ummantelt ist; und/oder

   - wobei Meßrohr (10), Einlaßrohrstück (11) und dem Auslaßrohrstück (12) jeweils durch Segmente eines einzigen, einstückigen Rohres gebildet sind; und/oder

- wobei jeder der Ausieger (15,16) zumindest anteilig unmittelbar am Gegenschwinger (20) fixiert ist; und/oder

- wobei jeder der Ausleger (15, 16) mittels einer auf den Gegenschwinger (20) aufgeschobenen Hülse gebildet ist; und/oder

- wobei jeder der beiden Ausleger (15, 16) eine Masse, $m_{15}$, $m_{16}$, aufweist, die mindestens gleich der Masse, $m_{20}$, des Gegenschwingers (20) ist; und/oder

- wobei jeder der beiden Ausleger (15, 16) eine Masse, $m_{15}$, $m_{16}$, aufweist, die kleiner ist als ein 5-faches der Masse, $m_{20}$, des Gegenschwingers (20); und/oder

- wobei der erste Ausleger (15) einen im Bereich des Einlaßrohrstücks (11) liegenden Massenschwerpunkt, $M_{15}$, aufweist, und wobei der zweite Ausfeger (16) einen im Bereich des Auslaßrohrstücks (12) liegenden Massenschwerpunkt, $M_{16}$, aufweist; und/oder

- wobei die Erregeranordnung wenigsten eine, insb. mit dem Gegenschwinger starr gekoppelte, Spule, sowie Anschlußleitungen dafür umfaßt; und/oder

- wobei die Sensoranordnung wenigsten eine, insb. mit dem Gegenschwinger starr gekoppelte, Spule sowie Anschlußleitungen dafür umfaßt; und/oder

- wobei jeder der beiden Ausleger (15, 16) im wesentlichen röhrenförmig oder hülsenförmig ausgebildet ist, insb. derart, daß jeder der Ausleger eine größte Wandstärke aufweist, die größer als eine größte Wandstärke des Gegenschwingers (20) ist und/oder derart, daß jeder der Ausleger (15, 16) eine kleinste Wandstärke aufweist, die größer als eine größte Wandstärke des Gegenschwingers (20) ist.

4. Meßwandler nach dem vorherigen Anspruch,

- wobei das Meßrohr im Betrieb zumindest zeitweise Torsionsschwingungen um eine mit der Biegeschwingungsachse im wesentlichen parallelen, insb. koinzidierenden, Torsionsschwingungsachse ausführt; und/oder

- wobei jeder der beiden Ausleger im Betrieb zumindest zeitweise Drehschwingungen um eine im wesentlichen quer zur Biegeschwingungsachse verlaufende gedachte Drehachse ($D_{15x}$, $D_{16x}$) ausführt.

5. Meßwandler nach einem der vorherigen Ansprüche, wobei die Kopplungszonen (11#, 12#) bei vibrierendem Meßrohr zumindest zeitweise lateral aus einer statischen Ruhelage bewegt sind.

6. Meßwandler nach dem vorherigen Anspruch, wobei jeder der beiden Ausleger wenigstens einen Ruhepunkt oder einen diesen umgebenden Ruhebereich aufweist, der auch bei lateral bewegten Kopplungszonen im wesentlichen ortsfest in einer zugehörigen statischen Ruhelage verharrt und/oder der einen relativen Abstand (A, A') zu einem sowohl vom Einlaßrohrstück als auch vom Auslaßrohrstück entfernten Bereich des Wandlergehäuses im wesentlichen beibehält.

7. Meßwandler nach dem vorherigen Anspruch, wobei der erste Abspannpunkt auf einem der Ausleger plaziert ist, so daß die zumindest eine an den zwei Abspannpunkten gehalterte Anschlußleitung an wenigstens einem der beiden Ausleger fixiert ist, insb. derart, daß die wenigstens eine an den zwei Abspannpunkten gehalterte Anschlußleitung zumindest anteilig außerhalb der gemeinsamen Schwingungsebene von Meßrohr und Gegenschwinger am Ausleger fixiert ist, und/oder derart, daß die wenigstens eine an den zwei Abspannpunkten gehalterte Anschlußleitung zumindest anteilig innerhalb des wenigstens einem Ruhebereich des Auslegers gehaltert ist.

8. Meßwandler nach dem vorherigen Anspruch,

- wobei der erste Abspannpunkt auf dem die Anschlußleitung halternden Ausleger innerhalb von dessen wenigstens einem Ruhebereich angeordnet ist, insb. derart, daß der erste Abspannpunkt am Ausleger mit dem wenigstens einen Ruhepunkt koinzidiert; und/oder

- wobei die wenigstens eine zwischen den zwei Abspannpunkten gehalterte Anschlußleitung zumindest anteilig adhäsiv am Ausleger fixiert ist; und/oder

- wobei der zweite Abspannpunkt für die wenigstens eine am Ausleger gehalterte Anschlußleitung *vis-a-vis* des ersten Abspannpunktes am Wandlergehäuses angeordnet ist.

9. Meßwandler nach einem der vorherigen Ansprüche, wobei an jedem der beiden Ausleger zumindest eine der Anschlußleitungen gehaltert ist.

10. Meßwandler nach einem der Ansprüche 1 bis 8, wobei an einem der beiden Ausleger keine der Anschlußleitungen gehaltert ist.

11. Meßwandler nach einem der vorherigen Ansprüche, wobei Einlaßrohrstück (11) und Auslaßrohrstück (12) im wesentlichen gerade sind und wobei Einlaßrohrstück (11) und Auslaßrohrstück (12) zueinander sowie zu einer die beiden Kopplungszonen imaginär verbindenden Längsachse (L) des Meßwandlers im wesentlichen fluchtend ausgerichtet sind.

**12.** Verwendung eines Meßwandlers gemäß einem der vorherigen Ansprüche in einem In-Line-Meßgerät zum Messen und/oder Überwachen wenigstens eines Parameters, insb. eines Massendurchflusse, m, einer Dichte, $\rho$, und/oder einer Viskosität, $\eta$, eines in einer Rohrleitung strömenden Mediums, insb. einem Coriolis-Massendurchflußmeßgerät, einem Dichtemeßgerät, einem Viskositätsmeßgerät oder dergleichen.

**Claims**

**1.** Vibronic-type transducer for a medium flowing through a pipe, said transducer comprising:

- an essentially straight measuring tube (10) which vibrates at least temporarily during operation and serves to conduct the medium, wherein the measuring tube (10) communicates with the pipe via an essentially straight inlet pipe section (11) which leads into the inlet side and an essentially straight outlet pipe section (12) which leads into the outlet side,
- a counter vibration mechanism (20), particularly a counter vibration mechanism that is essentially tubular and/or essentially straight, which is fixed on the measuring tube on the inlet side forming a first coupling zone (11#) and which is fixed on the measuring tube (10) on the outlet side forming a second coupling zone (12#),
- a first arm (15) which is coupled with the measuring tube (10) on the inlet side
- a second arm (16) which is coupled with the measuring tube (10) on the outlet side
- a sensor arrangement (50) which is supported at least partially on the counter vibration mechanism (20), said sensor arrangement serving to detect vibrations at least of the measuring tube (10)
- an exciter arrangement (40) which is supported at least partially on the counter vibration mechanism (20), said exciter arrangement serving to excite the measuring tube (10) at least
- a transducer housing (30) fixed on the inlet pipe section (11) and on the outlet pipe section (12), and
- connection cables, particularly for the exciter arrangement and/or the sensor arrangement, at least one of said connection cables being supported, at least at points, on an internal part of the transducer formed by the measuring tube, counter vibration mechanism and the two arms, and at least at points on the converter housing
- wherein, during operation, both the measuring tube and the counter vibration mechanism perform flexural vibrations at least temporarily around an imaginary axis of flexural vibration which interconnects the two coupling zones (11#, 12#) in an imaginary manner
- wherein a section at least of the one connecting cable, which is supported on the internal part and on the converter housing, extends, in a manner in which it is free to vibrate, between two suspension points which are at a distance from one another and spot-fix said connecting cable, wherein of said suspension points a first suspension point is arranged on the internal part of the transducer and a second suspension point is arranged on the transducer housing
- wherein the two suspension points are arranged in such a way that a relative distance between them essentially remains unchanged even when the measuring tube is vibrating, and
- wherein at least the at least one connecting cable supported at the suspension points is subsequently also routed along at least one section of the counter vibration mechanism (20) and is at least spot-fixed thereto in such a way that the at least one connecting cable supported between the two suspension points is fixed at least partially, particularly primarily, on the counter vibration mechanism along a neutral fiber of the counter vibration mechanism which essentially does not produce any distortion when the counter vibration mechanism performs flexural vibrations.

**2.** Transducer as claimed in the previous claim

- wherein the section of the at least one connecting cable extending between the two suspension points is routed in a manner in which it is essentially free to vibrate; and/or
- wherein the section of the connecting cable at least extending between the two suspension points is supported essentially, particularly permanently, in a manner that is free from tensile stress, and/or
- wherein at least the at least one connecting cable supported at the two suspension points is subsequently also routed along an inner wall surface of the transducer housing and is at least spot-fixed thereto; and/or
- wherein at least the at least one connecting cable supported between the two suspension points carries electricity at least temporarily during operation; and/or
- wherein all the connecting cables are secured on the same arm; and/or
- wherein all the connecting cables are secured on one of the two arms; and/or
- wherein, during operation, the measuring tube and the counter vibration mechanism oscillate laterally at least temporarily and/or partially in a useful mode by performing essentially coplanar flexural vibrations in a common imaginary plane of vibration, and wherein the at least one connecting cable secured at the two suspension points is fixed on the counter vibration mechanism at least partially outside the common plane of vibration of the measuring tube and counter vibration mechanism.

3. Transducer as claimed in one of the previous claims

    - wherein the measuring tube (10) and counter vibration mechanism are essentially straight and are aligned with one another in an essentially coaxial manner; and/or
    - wherein the measuring tube (10) is surrounded at least partially by the counter vibration mechanism (20); and/or
    - wherein the measuring tube (10), inlet pipe section (11) and outlet pipe section (12) are each formed by segments of a single one-piece pipe; and/or
    - wherein each of the arms (15, 16) is fixed directly on the counter vibration mechanism (20) at least in part; and/or
    - wherein each of the arms (15, 16) is formed by means of a sleeve fitted on the counter vibration mechanism (20); and/or
    - wherein each of the two arms (15, 16) has a mass, $m_{15}$, $m_{16}$, that is at least the same as the mass, $m_{20}$, of the counter vibration mechanism (20); and/or
    - wherein each of the two arms (15, 16) has a mass, $m_{15}$, $m_{16}$, that is smaller than 5 times the mass, $m_{20}$, of the counter vibration mechanism (20); and/or
    - wherein the first arm (15) has a center of mass, $m_{15}$, located in the area of the inlet pipe section (11), and wherein the second arm (16) has a center of mass, $m_{16}$, located in the area of the outlet pipe section (12); and/or
    - wherein the exciter arrangement comprises at least a coil, particularly one that is rigidly coupled with the counter vibration mechanism, as well as associated connecting cables; and/or
    - wherein the sensor arrangement comprises at least a coil, particularly one that is rigidly coupled with the counter vibration mechanism, as well as associated connecting cables; and/or
    - wherein each of the two arms (15, 16) is designed as essentially tubular or sleeve-like, particularly in such a way that each of the two arms has a largest wall thickness which is larger than a largest wall thickness of the counter vibration mechanism (20) and/or in such a way that each of the two arms (15, 16) has a smallest wall thickness which is larger than the largest wall thickness of the counter vibration mechanism (20).

4. Transducer as claimed in the previous claim,

    - wherein, during operation, the measuring tube at least temporarily performs torsional vibrations around an axis of torsional vibration which is essentially parallel to, particularly coinciding with, the axis of flexural vibration.
    - wherein, during operation, each of the two arms at least temporarily performs rotary vibrations around an imaginary axis of rotation ($D_{15x}$, $D_{16x}$) which is essentially perpendicular to the axis of flexural vibration.

5. Transducer as claimed in one of the previous claims, wherein, when the measuring tube vibrates, the coupling zones (11#, 12#) are at least temporarily moved laterally out of a static rest position.

6. Transducer as claimed in the previous claim, wherein each of the two arms has at least one rest point or a rest area surrounding this rest point which essentially remains stationary in an associated static rest position even when the coupling zones move laterally and/or which maintains a relative distance (A, A') to an area of the transducer housing which is at a distance from both the inlet pipe section and the outlet pipe section.

7. Transducer as claimed in the previous claim, wherein the first suspension point is located on one of the arms in such a way that the at least one connecting cable supported at the two suspension points is fixed to at least one of the two arms, particularly in such a way that the at least one connecting cable supported at the two suspension points is fixed on the arm at least partially outside the common plane of vibration of the measuring tube and counter vibration mechanism, and/or in such a way that the at least one connecting cable supported at the two suspension points is held at least partially within the at least one rest area of the arm.

8. Transducer as claimed in the previous claim

    - wherein the first suspension point situated on the arm supporting the connecting cable is arranged within the arm's at least one rest area particularly in such a way that the first suspension point coincides with the at least one rest point; and/or
    - wherein the at least one connecting cable supported between the two suspension points is adhesively fixed on the arm at least in part; and/or
    - wherein the second suspension point for the at least one connecting cable supported on the arm is arranged vis-a-vis the first suspension point on the converter housing.

9. Transducer as claimed in one of the previous claims, wherein at least one of the connecting cables is supported on each of the two arms.

10. Transducer as claimed in one of the claims 1 to 8, wherein none of the connecting cables is supported on one of the two arms.

11. Transducer as claimed in one of the previous claims, wherein the inlet pipe section (11) and the outlet pipe section (12) are essentially straight and wherein the inlet pipe section (11) and the outlet pipe section (12) are essentially flush-aligned with one another and with a longitudinal axis (L) of the transducer, which connects the two coupling zones in an imaginary manner.

12. Use of a transducer as claimed in one of the previous claims in an in-line measuring device to measure and/or monitor at least one parameter, particularly a mass flow, m, a density, p, and/or a viscosity, η, of a medium flowing through a pipe, particularly a Coriolis mass flowmeter, a density meter, a viscosity meter or similar.

**Revendications**

1. Transducteur du type vibratoire pour un produit s'écoulant dans une conduite, lequel transducteur comprend :

   - un tube de mesure (10) vibrant au moins temporairement en fonctionnement, pour l'essentiel droit, destiné à guider le produit, le tube de mesure (10) communiquant avec la conduite par l'intermédiaire d'un élément de tube d'entrée (11), notamment pour l'essentiel droit, débouchant côté entrée, et par l'intermédiaire d'un élément de tube de sortie (12), notamment pour l'essentiel droit, débouchant côté sortie,
   - un contre-vibrateur (20), notamment pour l'essentiel tubulaire et/ou pour l'essentiel droit, qui est fixé côté entrée sur le tube de mesure en formant une première zone de couplage (11#) et qui est fixé côté sortie sur le tube de mesure (10) en formant une deuxième zone de couplage (12#),
   - un premier bras (15) couplé côté entrée avec le tube de mesure (10)
   - un deuxième bras (16) couplé côté sortie avec le tube de mesure (10)
   - un ensemble capteur (50) fixé au moins partiellement au contre-vibrateur (20), destiné à détecter les vibrations au moins du tube de mesure (10),
   - un ensemble excitateur (40) fixé au moins partiellement au contre-vibrateur (20), destiné à exciter au moins le tube de mesure (10),
   - un boîtier de transducteur (30) fixé à l'élément de tube d'entrée (11) et à l'élément de tube de sortie (12), ainsi que
   - des câbles de raccordement, notamment pour l'ensemble excitateur et/ou pour l'ensemble capteur, câbles de raccordement parmi lesquels au moins un est maintenu au minimum ponctuellement sur une partie intérieure du transducteur, formée par le tube de mesure, le contre-vibrateur et les deux bras, et au minimum ponctuellement sur le boîtier du transducteur,
   - transducteur pour lequel aussi bien le tube de mesure que le contre-vibrateur exécutent, en fonctionnement, au moins temporairement des vibrations de flexion autour d'un axe de vibration de flexion imaginaire, qui relie de façon imaginaire les deux zones de couplage (11 #, 12#) entre elles,
   - transducteur pour lequel une partie de l'au moins un câble de raccordement maintenu sur la partie intérieure et le boîtier de transducteur s'étend en oscillation libre entre deux points d'ancrage distants l'un de l'autre, fixant ponctuellement le même câble de raccordement, points d'ancrage parmi lesquels un premier point est disposé sur la partie intérieure du transducteur et un deuxième point sur le boîtier du transducteur,
   - les deux points d'ancrage étant disposés de telle sorte qu'il reste une distance relative pour l'essentiel inchangée entre eux, y compris lorsque le tube de mesure vibre, et
   - transducteur pour lequel l'au moins un câble de raccordement maintenu sur les points d'ancrage est acheminé en aval de ces points également le long d'au moins une partie du contre-vibrateur (20) et y est fixé au moins ponctuellement de telle sorte que l'au moins un câble de raccordement maintenu entre les deux points d'ancrage est fixé au moins partiellement, notamment essentiellement sur le contre-vibrateur, le long d'une fibre pour l'essentiel neutre, ne produisant pas de distorsion, du contre-vibrateur lorsque ce dernier exécute des vibrations de flexion.

2. Transducteur selon la revendication précédente

   - pour lequel la partie de l'au moins un câble de raccordement s'étendant entre les deux points d'ancrage est posée pour l'essentiel à pouvoir osciller librement, et/ou
   - pour lequel la partie de l'au moins un câble de raccordement s'étendant entre les deux points d'ancrage est maintenue pour l'essentiel, notamment durablement, sans contraintes de traction, et/ou

- pour lequel au minimum l'au moins un câble de raccordement maintenu sur les deux points d'ancrage est posé en aval des points d'ancrage également le long d'une surface intérieure de paroi du boîtier de convertisseur et y est fixé au moins ponctuellement, et/ou

- pour lequel au minimum l'au moins un câble de raccordement maintenu entre les deux points d'ancrage conduit, en fonctionnement, au moins temporairement un courant électrique, et/ou

- pour lequel l'ensemble des câbles de raccordement sont fixés au même bras, et/ou

- pour lequel l'ensemble des câbles de raccordement sont fixés à l'un des deux bras, et/ou

- pour lequel le tube de mesure et le contre-vibrateur oscillent latéralement, en fonctionnement, au moins temporairement et/ou partiellement dans un mode utile, dans lequel ils exécutent des vibrations de flexion pour l'essentiel coplanaires dans un plan de vibrations imaginaire commun, et pour lequel l'au moins un câble de raccordement maintenu sur les deux points d'ancrage est fixé au moins partiellement sur le contre-vibrateur, en dehors du plan de vibrations commun du tube de mesure et du contre-vibrateur.

3. Transducteur selon l'une des revendications précédentes

- pour lequel le tube de mesure (10) et le contre-vibrateur sont pour l'essentiel droits et alignés l'un par rapport à l'autre essentiellement de façon coaxiale, et/ou

- pour lequel le tube de mesure (10) est entouré partiellement par le contre-vibrateur (20), et/ou

- pour lequel le tube de mesure (10), l'élément de tube d'entrée (11) et l'élément de tube de sortie (12) sont chacun formés par des segments d'un tube unique, monopièce, et/ou

- pour lequel chacun des bras (15, 16) est fixé au moins partiellement directement sur le contre-vibrateur (20), et/ou

- pour lequel chacun des bras (15, 16) est formé au moyen d'une douille enfilée sur le contre-vibrateur (20), et/ou

- pour lequel chacun des deux bras (15, 16) présente une masse, $m_{15}$, $m_{16}$, qui est au moins égale à la masse, $m_{20}$, du contre-vibrateur (20), et/ou

- pour lequel chacun des deux bras (15, 16) présente une masse, $m_{15}$, $m_{16}$, qui est inférieure à 5 fois la masse, $m_{20}$, du contre-vibrateur (20), et/ou

- pour lequel le premier bras (15) présente un centre de gravité, $M_{15}$, situé dans la zone de l'élément de tube d'entrée (11), et pour lequel le deuxième bras (16) présente un centre de gra-vité, $M_{16}$, situé dans la zone de l'élément de tube de sortie (12), et/ou

- pour lequel l'ensemble excitateur comprend au moins une bobine, notamment couplée de façon rigide avec le contre-vibrateur, ainsi que des fils de raccordement associés, et/ou

- pour lequel l'ensemble capteur comprend au moins une bobine, notamment couplée de façon rigide avec le contre-vibrateur, ainsi que des fils de raccordement associés, et/ou

- pour lequel chacun des deux bras (15, 16) est constitué pour l'essentiel en forme de tube ou en forme de douille, notamment de telle sorte que chacun des bras présente une épaisseur de paroi maximale, qui est supérieure à l'épaisseur de paroi maximale du contre-vibrateur (20) et/ou de telle sorte que chacun des bras (15, 16) présente une épaisseur de paroi minimale, qui est supérieure à l'épaisseur de paroi maximale du contre-vibrateur (20).

4. Transducteur selon la revendication précédente

- pour lequel le tube de mesure exécute en fonctionnement au moins temporairement des vibrations torsionnelles autour d'un axe de vibration torsionnelle pour l'essentiel parallèle, notamment coïncidant, avec l'axe de vibration de flexion, et/ou

- pour lequel chacun des deux bras exécute en fonctionnement au moins temporairement des vibrations de rotation autour d'un axe de rotation ($D_{15x}$, $D_{16x}$) imaginaire, pour l'essentiel perpendiculaire à l'axe de vibration de flexion.

5. Transducteur selon la revendication précédente, pour lequel les zones de couplage (11#, 12#) sont déplacés, lorsque le tube de mesure vibre, au moins temporairement latéralement à partir d'une position de repos statique.

6. Transducteur selon la revendication précédente, pour lequel chacun des deux bras présente au moins un point de repos ou une zone de repos entourant celui-ci, qui reste dans une position de repos statique correspondante, pour l'essentiel stable, en cas de zones de couplage se déplaçant latéralement, et/ou qui conserve pour l'essentiel une distance relative (A, A') par rapport à une zone du boîtier de transducteur distante à la fois de l'élément de tube d'entrée et de l'élément de tube de sortie.

7. Transducteur selon la revendication précédente, pour lequel le premier point d'ancrage est placé sur l'un des bras de telle sorte que l'au moins un câble de raccordement maintenu sur les deux points d'ancrage est fixé sur au moins l'un des deux bras, notamment de telle sorte que l'au moins un câble de raccordement maintenu sur les deux points d'ancrage est maintenu sur le bras au moins partiellement en dehors du plan de vibration commun du tube de mesure et du contre-vibrateur, et/ou de telle sorte que l'au moins un câble de raccordement maintenu sur les deux points d'ancrage est maintenu au moins partiellement à l'intérieur de l'au moins une zone de repos du bras.

8. Transducteur selon la revendication précédente,

    - pour lequel le premier pont d'ancrage situé sur le bras maintenant le câble de raccordement est disposé à l'intérieur de son au moins une zone de repos, notamment de telle sorte que le premier point d'ancrage coïncide avec l'au moins un point de repos, et/ou
    - pour lequel l'au moins un câble de raccordement maintenu entre les deux points d'ancrage est fixé au moins partiellement par liaison adhésive sur le bras, et/ou
    - pour lequel le deuxième point d'ancrage pour l'au moins un câble de raccordement maintenu sur le bras est disposé vis-à-vis du premier point d'ancrage sur le boîtier de transducteur.

9. Transducteur selon l'une des revendications précédentes, pour lequel au moins l'un des câbles de raccordement est maintenu sur chacun des deux bras.

10. Transducteur selon l'une des revendications précédentes 1 à 8, pour lequel aucun câble de raccordement n'est maintenu sur l'un des deux bras.

11. Transducteur selon l'une des revendications précédentes, pour lequel l'élément de tube d'entrée (11) et l'élément de tube de sortie (12) sont pour l'essentiel droits et pour lequel l'élément de tube d'entrée (11) et l'élément de tube de sortie (12) sont alignés pour l'essentiel de façon affleurante l'un par rapport à l'autre, ainsi que par rapport à un axe longitudinal (L) du transducteur reliant de façon imaginaire les deux zones de couplage.

12. Utilisation d'un transducteur selon l'une des revendications précédentes dans un appareil de mesure en ligne destiné à la mesure et/ou la surveillance d'au moins un paramètre, notamment un débit massique, m, une densité, p, une viscosité, n, d'un produit s'écoulant dans une conduite, notamment un débitmètre massique Coriolis, un densimètre, un viscosimètre, etc.

Fig. 1

Fig. 2

Fig. 3a

Fig. 3b

Fig. 4

Fig. 5

Fig. 6a

Fig. 6b

Fig. 6c

Fig. 6d

Fig. 7a          Fig. 7b

Fig. 8

Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 317340 A
- US 5398554 A
- US 5476013 A
- US 5531126 A
- US 5691485 A
- US 5705754 A
- US 5796012 A
- US 5945609 A
- US 5979246 A
- US 6006609 A
- US 6397685 B
- US 6691583 B
- US 6840109 B
- WO 9951946 A
- WO 9940394 A
- WO 0014485 A
- EP 831306 A
- US 7040179 B
- US 5736653 A
- US 5381697 A
- WO 0102816 A
- US 5969265 A
- US 5287754 A
- US 5796010 A
- US 6948379 B